(19) Europäisches Patentamt
European Patent Office
Office européen des brevets

(11) **EP 3 125 382 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(51) Int Cl.:
***H02G 1/12*** *(2006.01)*      *H01R 43/28* *(2006.01)*

(21) Anmeldenummer: **16181759.8**

(22) Anmeldetag: **28.07.2016**

(54) **KABELKLEMMVORRICHTUNG ZUR AUFWEITUNG FÜR SCHIRMGEFLECHTEN VON KABELN**

CABLE CLAMPING DEVICE FOR WIDENING OF BRAIDED SHIELDS OF CABLES

DISPOSITIF DE SERRAGE DE CABLES DESTINE A ELARGIR LES TRESSES DE BLINDAGE DE CABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2015 DE 102015009989**

(43) Veröffentlichungstag der Anmeldung:
**01.02.2017 Patentblatt 2017/05**

(73) Patentinhaber: **Komax SLE GmbH & Co. KG 94481 Grafenau (DE)**

(72) Erfinder:
• **LENZ, Andreas 94481 Grafenau (DE)**
• **BOXLEITNER, Christian 94481 Grafenau (DE)**

(74) Vertreter: **Kramer Barske Schmidtchen Patentanwälte PartG mbB European Patent Attorneys Landsberger Strasse 300 80687 München (DE)**

(56) Entgegenhaltungen:
**EP-A1- 0 297 484**      **EP-A1- 2 887 475**
**WO-A1-2006/128597**      **DE-A1-102013 206 804**
**GB-A- 521 433**      **KR-U- 20090 012 235**

EP 3 125 382 B1

**Beschreibung**

Die vorliegende Erfindung betrifft eine Kabelklemmvorrichtung zur Aufweitung von Schirmgeflechten von Kabeln, beispielsweise Koaxialkabeln.

Allgemein bekannte Kabel mit Abschirmung weisen neben einem oder mehreren Innenleitern eine den oder die Innenleiter umgebende Abschirmung auf. Die Abschirmung erfolgt normalerweise mittels eines Schirmgeflechts, welches beispielsweise aus elektrisch leitendem Draht ausgebildet ist. Ein Koaxialkabel ist ein Beispiel für ein solches Kabel mit Schirmgeflecht und weist einen von Isolationsmaterial (Innenisolierung) umgebenen Innenleiter auf. Koaxial hierzu ist das Isolationsmaterial des Innenleiters von einem Außenleiter in Form eines Geflechts (Schirmgeflecht) umgeben. Das Schirmgeflecht wiederum ist ebenfalls von Isolationsmaterial (Außenisolierung) umgeben. Zur Montage eines Steckverbinders am Ende eines Koaxialkabels ist es unter Anderem notwendig, die das Schirmgeflecht umgebende äußere Isolierung zu entfernen und anschließend das auf der Innenisolierung aufliegende Ende des Schirmgeflechts mit einer vorbestimmten Länge unter Aufweitung desselben im Wesentlichen senkrecht zur Erstreckungsrichtung des Innenleiters radial aufzustellen. Bisher wurde dies beispielsweise mittels zwischen die Innenisolierung und das Schirmgeflecht eingeführten Druckluftstrahlen erreicht. Ein weiteres Verfahren zum Aufweiten und Aufstellen des Schirmgeflechts ist aus der WO 2006/128597 A1 bekannt, bei dem das Schirmgeflecht am Ende des Kabels freigelegt, radial aufgeweitet und über eine vorbestimmte Länge in axialer Richtung von dem Ende des Koaxialkabels weg umgebogen wird, wobei das Schirmgeflecht zum Aufweiten desselben über wenigstens einen Teil des Umfangs des Koaxialkabels mit einer radialen nach innen gerichteten Kraft beaufschlagt wird.

Weitere Beispiele für Kabel mit Schirmgeflechten sind mehradrige, sogenannte Multicore-Leitungen, die von einem gemeinsamen Schirm umgeben sind, wie zum Beispiel im Automobilbau verwendete HSD-Leitungen.

Eine weitere Vorrichtung zum Aufweiten eines Schirmgeflechts ist aus der DE 10 2013 206 804 A1 bekannt, bei der die Aufweitung durch zwei ineinandergreifende Formflügel, die jeweils eine trapezförmige Nut aufweisen, erfolgt.

EP 0 297 484 A1 offenbart eine Anordnung von mehreren Halte-, Zentrier- oder Messerbacken für Abschneide- und/oder Abisoliervorrichtungen für stab- oder kabelförmige Gegenstände. Die Backen sind in je eine bestimmte Richtung verschieb- oder verschwenkbar. Durch das Verschieben oder Verschwenken der Backen ergeben sich ständig wechselnde Berührungspunkte bei wechselnden Durchmessern der Gegenstände und eine verteilte Abnutzung der Backen. Dabei wird der Durchmesser einer Öffnung zwischen den Backen durch synchrone Änderung der Anordnung der Backen verändert.

GB 521,433 A offenbart ein Werkzeug zum Abziehen der Isolierung elektrischer Kabel mit verschwenkbaren Rasierklingen zum Abschneiden der Isolierung.

EP 2 887 475 A1 offenbart eine Vorrichtung zum Durchtrennen einer Abschirmung eines Koaxialkabels mit einer Aufweiteinrichtung, die in einer senkrecht zu einer Längserstreckungsachse des Koaxialkabels verlaufenden Richtung einen Druck auf einen freiliegenden Teil der Abschirmung ausübt.

KR 20-2009-0012235 U offenbart eine Vorrichtung zum Entfernen einer Ummantelung eines Kabels mit mehreren Schneidklingen.

Aufgabe der vorliegenden Erfindung ist es, eine verbesserte Kabelklemmvorrichtung für die Aufweitung von Schirmgeflechten anzugeben, bei der der Außenleiter (Schirmgeflecht) über den gesamten Umfang möglichst gleichmäßig aufgeweitet wird und gleichzeitig Verletzungen des Schirmgeflechts beim Aufweiten weitestgehend reduziert werden.

Diese Aufgabe wird gelöst mit einer Kabelklemmvorrichtung gemäß dem unabhängigen Anspruch 1. Weiterbildungen sind in den abhängigen Ansprüchen angegeben.

Mit der Klemmvorrichtung wird ein gleichmäßiges und prozesssicheres Aufweiten des Schirmgeflechts erreicht. Da die Größe des Umfangs und/oder Durchmessers des im Wesentlichen kreisförmigen Durchgangs, der von den Klemmkörpern der Kabelklemmvorrichtung ausgebildet wird, im Wesentlichen frei verstellbar ist, kann eine gleichmäßige Aufweitung unabhängig vom Kabeldurchmesser und der Kabeltoleranz erreicht werden. Zudem kann ein und dieselbe Vorrichtung für verschiedene Kabelquerschnitte und Kabeltypen verwendet werden. Durch die gleichmäßige Kraftverteilung über den gesamten Umfang und das im wesentliche spaltfreie aufeinander Gleiten der einzelnen Klemmkörper werden mögliche Verletzungen am Schirmgeflecht weitestgehend vermieden.

Weitere Merkmale und Zweckmäßigkeiten ergeben sich aus der Beschreibung von Ausführungsbeispielen anhand der Figuren. Es zeigen:

Fig. 1A eine Vorderansicht einer Kabelklemmvorrichtung gemäß einer beispielhaften ersten Ausführungsform;
Fig. 1B eine Rückansicht der Kabelklemmvorrichtung gemäß der ersten Ausführungsform;
Fig. 1C eine Aufsicht auf die Kabelklemmvorrichtung gemäß der ersten Ausführungsform;
Fig. 1D eine Querschnittsansicht durch Zentralachsen eines Kabelklemmmechanismusbereichs und eines Antriebsvorrichtungsbereichs der Kabelklemmvorrichtung gemäß der ersten Ausführungsform;
Fig. 2A eine Vorderansicht der teilweise zusammengebauten Kabelklemmvorrichtung gemäß der ersten Ausführungsform;

Fig. 2B eine Rückansicht der Fig. 2A;

Fig. 3A eine Vorderansicht der teilweise zusammengebauten Kabelklemmvorrichtung gemäß der ersten Ausführungsform;

Fig. 3B eine Rückansicht der Fig. 3A;

Fig. 3C eine Vorderansicht einer Führungseinrichtung der Kabelklemmvorrichtung gemäß der ersten Ausführungsform;

Fig. 3D eine Rückansicht von Fig. 3C;

Fig. 4A eine Vorderansicht der teilweise zusammengebauten Kabelklemmvorrichtung gemäß der ersten Ausführungsform;

Fig. 4B eine Rückansicht der Fig. 4A;

Fig. 5 eine Vorderansicht der teilweise zusammengebauten Kabelklemmvorrichtung gemäß der ersten Ausführungsform;

Fig. 6 eine Vorderansicht der teilweise zusammengebauten Kabelklemmvorrichtung gemäß der ersten Ausführungsform;

Fig. 7A eine Vorderansicht einer Kabelklemmvorrichtung gemäß einer beispielhaften zweiten Ausführungsform;

Fig. 7B eine Vorderansicht der teilweise zusammengebauten Kabelklemmvorrichtung gemäß der zweiten Ausführungsform;

Fig. 7C eine Rückansicht der teilweise zusammengebauten Kabelklemmvorrichtung gemäß der zweiten Ausführungsform;

Fig. 7D eine Aufsicht auf die Kabelklemmvorrichtung gemäß der zweiten Ausführungsform;

Fig. 8A eine Vorderansicht der teilweise zusammengebauten Kabelklemmvorrichtung gemäß der zweiten Ausführungsform;

Fig. 8B eine Rückansicht der Fig. 8A;

Fig. 9A eine Vorderansicht der teilweise zusammengebauten Kabelklemmvorrichtung gemäß der zweiten Ausführungsform;

Fig. 9B eine Rückansicht der Fig. 9A;

Fig. 9C eine Vorderansicht einer Führungseinrichtung der Kabelklemmvorrichtung gemäß der zweiten Ausführungsform;

Fig. 9D eine Rückansicht von Fig. 9C;

Fig. 10A eine Vorderansicht der teilweise zusammengebauten Kabelklemmvorrichtung gemäß der zweiten Ausführungsform;

Fig. 10B eine Rückansicht der Fig. 10A;

Fig. 11 eine Vorderansicht der teilweise zusammengebauten Kabelklemmvorrichtung gemäß der zweiten Ausführungsform; und

Fig. 12 eine Vorderansicht der teilweise zusammengebauten Kabelklemmvorrichtung gemäß der ersten Ausführungsform.

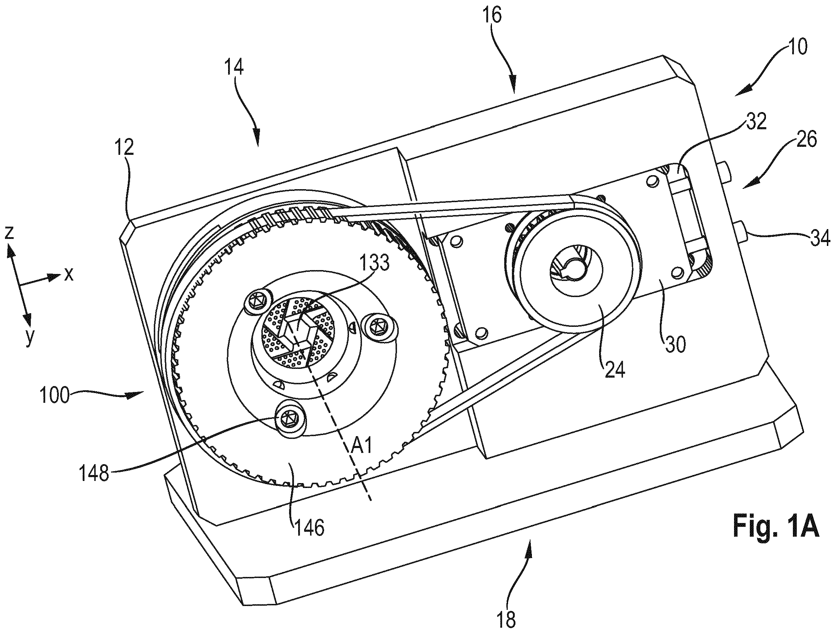

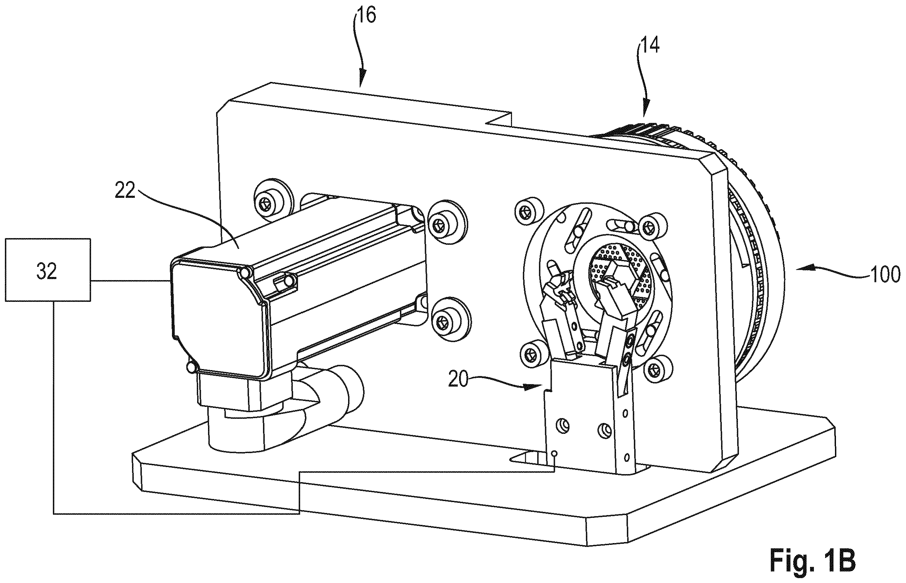

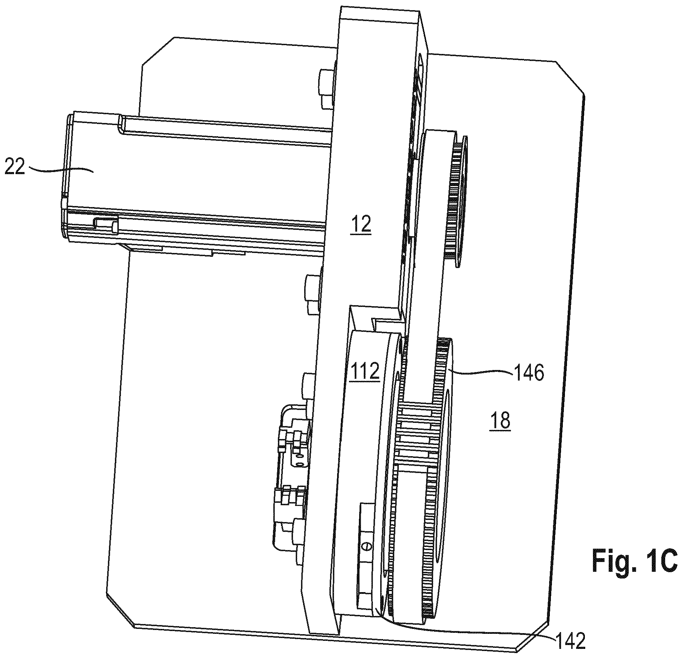

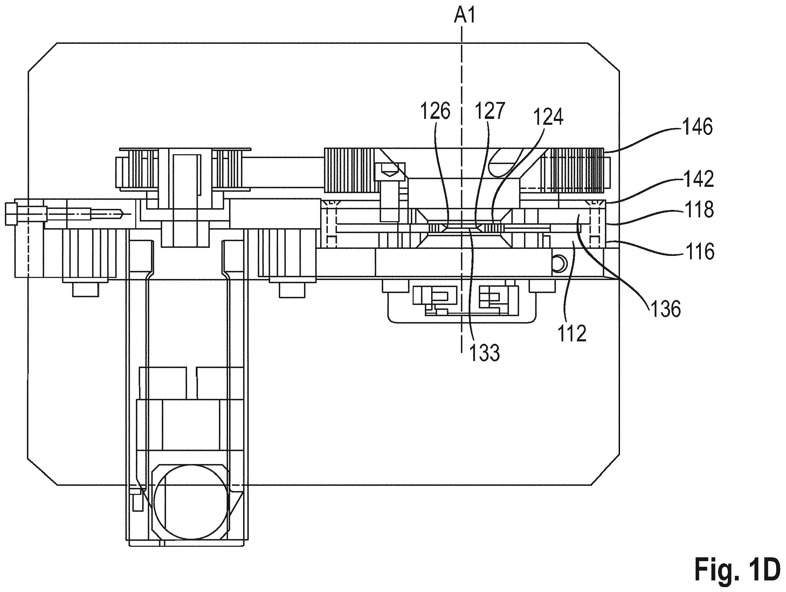

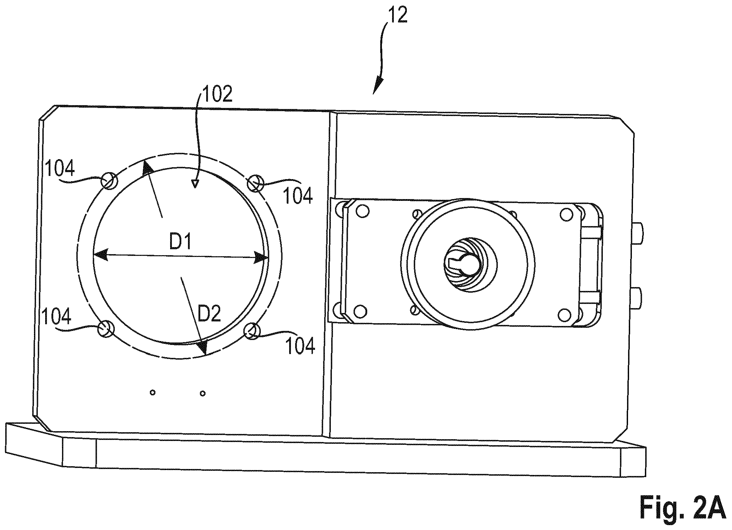

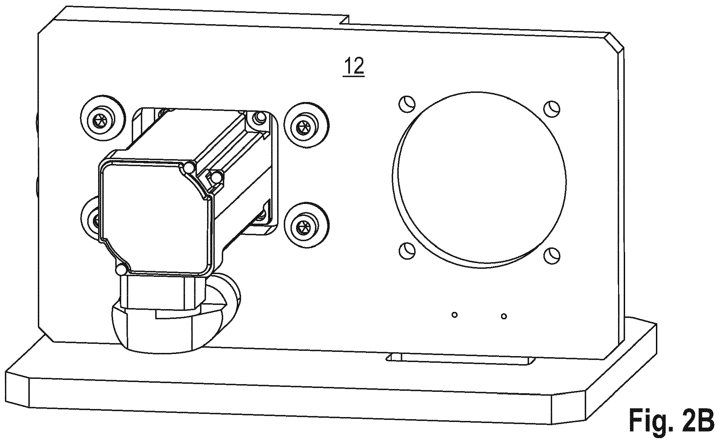

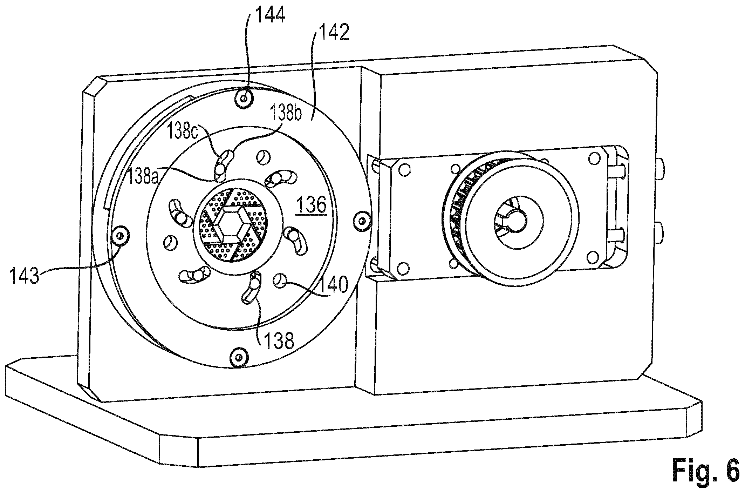

Im Folgenden werden eine erste und eine zweite Ausführungsform einer Kabelklemmvorrichtung 10 anhand der Figuren 1 bis 12 beschrieben. Eine vollständig zusammengebaute Kabelklemmvorrichtung gemäß der ersten Ausführungsform ist in den Figuren 1A bis 1D gezeigt. Figuren 2 bis 6 zweigen jeweils 3D-Aufsichten (Vorder- und Rück(seiten)ansichten) auf die teilweise zusammengebaute Kabelklemmvorrichtung, beispielsweise während eines Montagevorgangs. Alle in den Aufsichten gemäß Figuren 2 bis 6 gezeigten Bauteile und Anordnungen sind auch in der vollständig zusammengebauten Kabelklemmvorrichtung gemäß Fig. 1 vorhanden. Das in der Fig. 1 gezeigte Koordinatensystem gilt für alle Figuren (entsprechend gedreht).

Wie aus Fig. 2A und 2B ersichtlich ist, weist die Kabelklemmvorrichtung eine Basisplatte 12 auf, die im Wesentlichen rechteckig ausgebildet ist. Die Basisplatte 12 hat eine Länge in einer X-Richtung und eine Breite in einer dazu senkrechten Y-Richtung. Die Basisplatte 12 hat eine Dicke in einer zu der X- und Y-Richtung senkrechten Z-Richtung. Die Basisplatte ist in ihrer Längsrichtung in einen Kabelklemmmechanismusbereich 14 und einen Antriebsvorrichtungsbereich 16 unterteilt. Die Basisplatte 12 ist mit einer ihrer Längskanten auf einer ebenfalls rechteckigen Fußplatte 18, die sich in einer X-Z-Ebene erstreckt, angebracht oder integral mit der Fußplatte 18 ausgebildet.

Auf der in Fig. 1A dargestellten Vorderseite der Basisplatte 12 ist in bzw. an dem Kabelklemmmechanismusbereich 14 ein Kabelklemmmechanismus 100 vorgesehen, dessen Aufbau unten detaillierter beschrieben wird. Auf der in Fig. 1B gezeigten Rückseite der Basisplatte 18 ist in bzw. an dem Kabelklemmmechanismusbereich 14 weiter eine Kabelhaltevorrichtung 20 zum Positionieren und Halten eines nicht gezeigten Kabelendes in dem Kabelklemmmechanismus 100 an der Basisplatte 12 und/oder der Fußplatte 18 befestigt, beispielsweise durch Schweißen, oder integral mit ihr ausgebildet.

In bzw. an dem Antriebsvorrichtungsbereich 16 ist ein sich durch den Antriebsvorrichtungsbereich 16 der Basisplatte 12 erstreckender Motor 22 zum Antreiben des Kabelklemmmechanismus 100 angebracht.

Im Weiteren wird der Aufbau des Kabelklemmmechanismus 100 insbesondere anhand der Figuren 2 bis 6 detailliert beschrieben.

Wie aus den Fig. 2A und 2B ersichtlich ist, weist der Kabelklemmmechanismusbereich 14 der Basisplatte 12 eine kreisförmige Öffnung (Durchgangsöffnung) 102 mit einem Durchmesser D1 auf. Durch die kreisförmige Öffnung 102 verläuft eine senkrecht zu der Basisplatte 12 in Z-Richtung verlaufende imaginäre Zentralachse A1 (siehe Fig. 1). Radial außerhalb der kreisförmigen Öffnung 102 sind in Umfangsrichtung gleichmäßig verteilt vier weitere kleinere Durchgangsbohrungen 104 auf einem imaginären Kreis mit einem zweiten Durchmesser D2 ausgebildet.

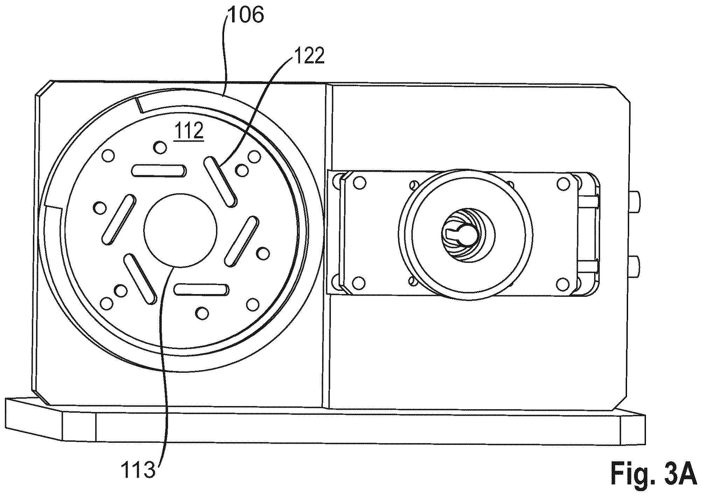

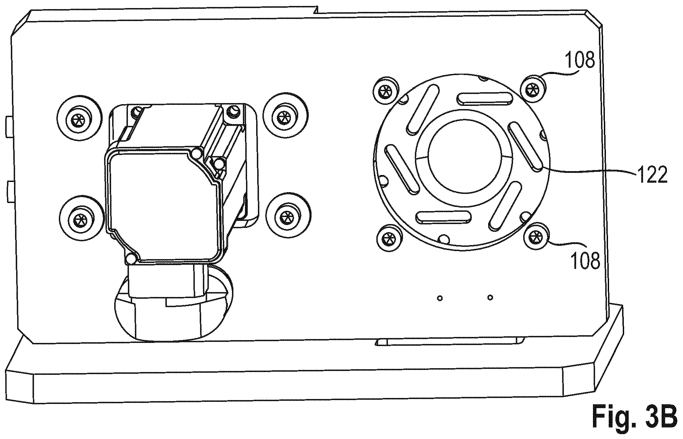

Wie es in den Fig. 3A und 3B gezeigt ist, wird in einem ersten Schritt eine scheibenförmige Führungseinrichtung 106 auf der Vorderseite der Basisplatte 12 angebracht.

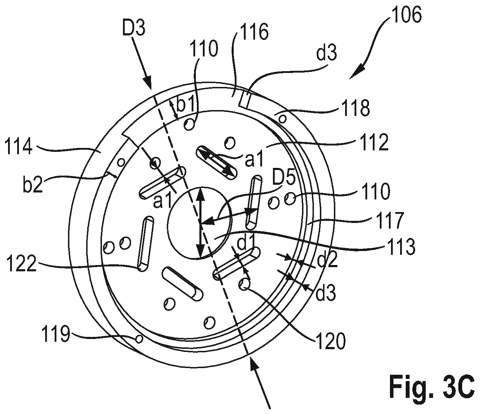

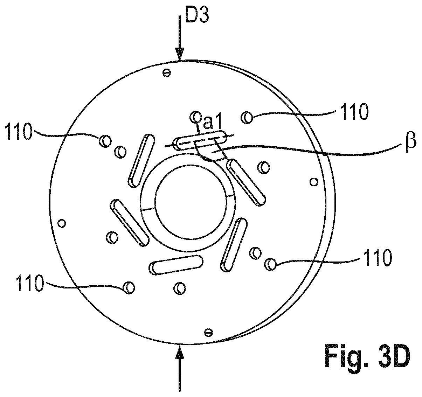

Fig. 3C und 3D zeigen die Vorder- und Rückseite der Führungseinrichtung 106 im nicht-montierten Zustand. Die Führungseinrichtung 106 ist im Wesentlichen aus einem scheibenförmigen Grundkörper 112 mit einem Außendurchmesser D3, der größer als der Durchmesser D1 ist, und einer ersten Dicke d1 ausgebildet. In dem scheibenförmigen Grundkörper 112 ist ein zentrales Durchgangsloch 113 mit einem Durchmesser D4, der kleiner als der Durchmesser D1 ist, vorgesehen. Im eingebauten Zustand stimmt eine Zentralachse durch das Durchgangsloch 113 mit der Zentralachse A1 überein. In Umfangsrichtung gleichmäßig verteilt sind auf einem imaginären Kreis mit dem Durchmesser D2 vier erste Gewindebohrungen 110 vorgesehen. Im eingebauten Zustand sind die Gewindebohrungen 110 mit den Durchgangsbohrungen 104 ausgerichtet.

Weiter sind radial innerhalb der ersten Gewindebohrungen 110 auf einem imaginären Kreis mit einem Durchmesser D5 sechs in Umfangsrichtung gleichmäßig verteilte zweite Passbohrungen 120 vorgesehen. Des Weiteren weist der scheibenförmige Grundkörper 112 radial innerhalb der zweiten Passbohrungen 120 sechs geradlinige um die Zentralachse A1 angeordnete Führungslanglöcher 122 auf. Jedes Führungslangloch 122 weist eine erste vorbestimmte Länge c auf und verläuft in einer vorbestimmten Richtung. Imaginäre Verlängerungen benachbarter Führungslanglöcher schneiden sich in einem Winkel β von 120° zueinander.

Die Mittelpunkte der Führungslanglöcher 122 bezüglich ihrer jeweiligen Längserstreckung liegen auf einem gemeinsam imaginären Kreis um die Zentralachse A1. Eine imaginäre Ebene, in der die imaginäre Zentralachse durch das Durchgangsloch 113 und zwei Mittelpunkte in Längsrichtung der Führungslanglöcher 122 liegen, bildet keine Symmetrieebene für die jeweiligen Führungslanglöcher 122. Stattdessen sind gegenüberliegende Führungslanglöcher 122 in dieser Ausführungsform parallel zueinander angeordnet und ist ihre Längsrichtung bezüglich der imaginären Ebene geneigt. Jede Passbohrungen 120 ist in einem vorbestimmten Abstand a1 senkrecht zu der Längserstreckung des jeweiligen Führungslanglochs 122 zu dem Führungslangloch 122 mittig bezüglich der Enden Führungslangloches 122 angeordnet. Somit verläuft keines der Führungslanglöcher 122 senkrecht zu einer imaginären radialen Linie ausgehend von der Zentralachse A1 durch den Mittelpunkt des jeweiligen Führungslanglochs 122.

Im Bereich des Umfangsrands des Grundkörpers ist auf der in Fig. 3C gezeigten Vorderseite des Grundkörpers 112 ein stufenförmiger, ringförmiger Randbereich 114 ausgebildet, der außen bündig mit dem Umfangsrand des Grundkörpers 112 abschließt. Der Randbereich 114 ist bevorzugt integral mit dem Grundkörper 112 ausgebildet. Wie es in Fig. 3C gezeigt ist, wird der Randbereich 114 aus einem ersten Ringbereich 116 ausgebildet, der eine erste radiale Breite b1 in der Radialrichtung und eine zweite Dicke d2 aufweist und auf der Vorderseite des Grundkörpers 112 aufgesetzt ist bzw. integral mit diesem ausgebildet. Auf dem ersten Ringbereich 116 ist in der Dickenrichtung ein zweiter, in der Umfangsrichtung unterbrochener Ringbereich 118 ausgebildet, der eine zweite Breite b2 in der Radialrichtung und eine dritte Dicke d3 aufweist. Die zweite Breite b2 ist kleiner als die erste Breite b1, so dass auf der Vorderfläche des ersten Ringbereichs 116 eine ringförmige Stufe 117 ausgebildet wird. Auf der Vorderseite zweiten Ringbereichs 118 sind vier in Umfangsrichtung gleichmäßig verteilte Gewindebohrungen 119 ausgebildet. Die Ringbereiche 116, 118 können integral mit dem Grundkörper 112 ausgebildet sein. Die Unterbrechung des Ringbereichs 118 ist optional.

Die Rückseite des scheibenförmigen Grundkörpers 112, die dazu ausgebildet ist, im zusammengebauten Zustand an der Basisplatte 12 anzuliegen, ist eben. Wie es in den Fig. 3A und 3B gezeigt ist, ist die in Fig. 3D gezeigte Rückseite des scheibenförmigen Grundkörpers 112 mittels Schraubbolzen 108, die durch die Durchgangsbohrungen 104 in der Basisplatte 12 verlaufen und in die entsprechenden Gewindebohrungen 110 der Führungseinrichtung 106 eingreifen, an der Basisplatte 12 befestigt. Der Grundkörper 112 bzw. die Führungseinrichtung 106 ist dadurch derart bezüglich der Basisplatte 12 angeordnet, dass die Zentralachse des Grundkörpers 112 identisch mit einer imaginären durch das Durchgangsloch 102 verlaufenden Zentralachse A1 ist.

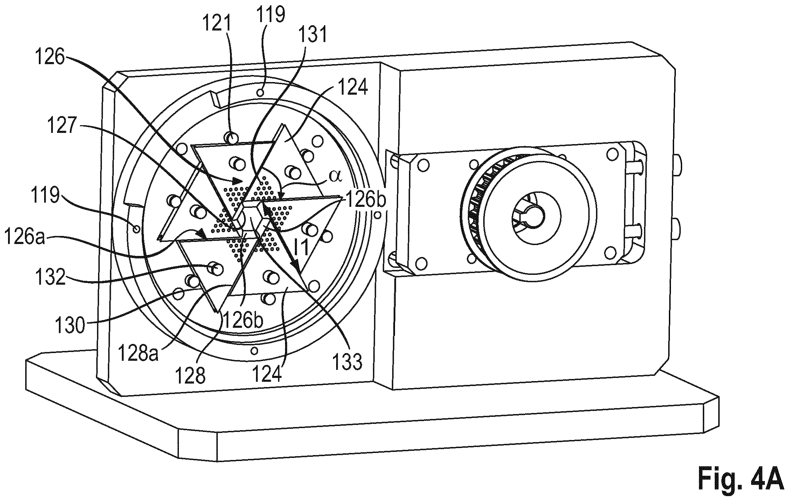

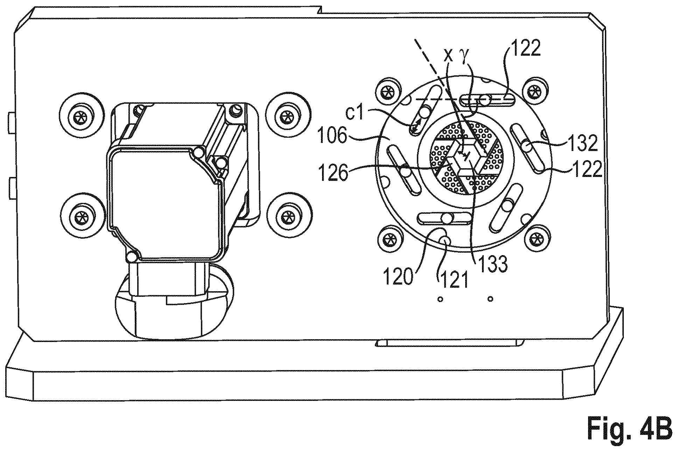

In einem nächsten Schritt, der in den Fig. 4A und 4B gezeigt ist, werden Führungsbolzen (Passbolzen) 121 in die zweiten Passbohrungen 120 eingesetzt. Die Führungsbolzen 121 sind so ausgebildet, dass sie nach dem Einsetzen in die Passbohrungen 120 von dem scheibenförmigen Grundkörper 112 geringfügig weniger als die zweite Dicke d2 des ersten Randbereichs 116 vorstehen.

Weiter werden die eigentlichen Klemmkörper 124, deren Ränder bzw. Kanten letztendlich zur Aufweitung des Schirms mit diesem in Kontakt kommen, in den Kabelklemmmechanismus 100 eingesetzt.

Jeder Klemmkörper 124 ist in der vorliegenden Ausführungsform als gleichseitiges Dreieck ausgebildet, wobei eine Seite (Kante) bzw. Seitenfläche (Kantenfläche) des gleichseitigen Dreiecks eine Klemmfläche 126, eine zweite Seite eine Gleitfläche 128 und die dritte Seite eine Basisfläche 130 bildet. In der hier gezeigten Ausführungsform sind die Klemmfläche 126, die Gleitfläche 128 und die Basisfläche 130 in dieser Reihenfolge im Uhrzeigersinn in einer Aufsicht auf die Vorderseite vorgesehen. Jede Seite, insbesondere die der Klemmfläche 126 und der Gleitfläche 128 ist eben und hat eine erste Länge 11. Jeder Klemmkörper hat eine Dicke d4, die geringer ist, als die zweite Dicke d2 des ersten Randbereichs 116.

Die Klemmfläche 126 ist bevorzugt aus zwei Klemmflächen 126 ausgebildet, die umgekehrt V-förmig angeordnet sind. D.h., die Klemmfläche 126 ist nicht senkrecht zu der Vorder- bzw. Rückfläche bzw. -seite des Dreiecks ausgebildet, sondern es sind zwei in einem spitzen Winkel zueinander angeordnete Flächen vorgesehen, die sich in der Dickenrichtung mittig in einer Klemmkante 127 treffen. Die Gleitfläche 128 ist bevorzugt aus zwei Gleitflächen ausgebildet, die eine V-förmige Nut ausbilden, in die die umgekehrt V-förmige(n) Klemmfläche(n) 126 eines anderen Klemmkörpers 124 im Wesentlichen spielfrei eingreifen kann. Die Basisfläche 130 ist als ebene Fläche, die senkrecht zu der Vorder- bzw. Rückseite des Klemmkörpers 124 verläuft, ausgebildet.

Des Weiteren weist jeder Klemmkörper 124 auf seiner Vorder- und Rückseite zentral bezüglich der Längserstreckung der Basisfläche 130 und in dem Abstand a1 (bzw. geringfügig kleiner als a1) senkrecht zu der Basisfläche angeordnete Führungsbolzen 132 auf. Die Führungsbolzen 132 können auch integral durch einen einzelnen Führungsbolzen 132, der durch den Klemmköper 124 hindurch verläuft und an diesem befestigt ist, beispielsweise durch Schweißen, ausgebildet sein. Der Führungsbolzen 132 steht, wie es aus Fig. 4A und 4B ersichtlich ist, sowohl auf der Vorderseite als auch auf der Rückseite jedes Klemmkörpers 124 um einen Betrag, der bevorzugt kleiner der Dicke d1 des Grundkörpers 112 ist, vor. Alternativ können auch separat ausgebildete Führungsbolzen 132 auf der Vorder- und Rückseite der Klemmkörper 124 vorgesehen sein.

Jeder Klemmkörper weist nahe dem Bereich des Klemmkörpers, in dem sich Klemmfläche 126 und Gleitfläche 128 schneiden, weiter eine Vielzahl kleinerer Durchgangsbohrungen 131 zwischen seiner Vorder- und Rückseite auf. Die Durchgangsbohrungen dienen dazu, Druckluft, die unterstützend zur Aufweitung des Schirms auf diesen gerichtet wird, hindurchzulassen. Die Durchgangsbohrungen 131 hindern die Druckluft, die optional gegen das Ende des Kabels zum erleichtern des Aufweitens (Aufspreizens) des Schirms geblasen werden kann, daran, sich vor der Vorrichtung, d.h. vor den Klemmkörpern, zu staunen, was den negativen Effekt einer Verschlechterung des Aufweitungseffekts mittels der Druckluft hätte. In einer solchen Ausführungsform ist eine Druckluftzuführvorrichtung zum Zuführen der Druckluft, die das Aufweiten der Schirme des erleichtert, vorgesehen.

Jeder Klemmkörper 124 ist mit seinem rückseitigen Führungsbolzen 132 in die oben genannten Führungslanglöcher 122 so eingesetzt, dass jeweils mindestens ein Berührbereich 126a einer Klemmfläche 126 eines Klemmkörpers 124 mit einem Berührbereich 128a einer Gleitfläche 128 eines benachbarten Klemmkörpers 124 und mindestens ein Berührbereich 128a der Gleitfläche 128 des einen ersten Klemmkörpers 124 mit mindestens einem Berührbereich 126a der Klemmfläche 126 des jeweils anderen benachbarten dritten Klemmkörpers 124 in Berührung ist. Der Bereich der Klemmfläche 126, der nicht mit der Gleitfläche 128 des benachbarten Klemmkörpers 124 in Berührung ist, wird als Klemmbereich 126b bezeichnet. Die umgekehrt V-förmigen Klemmflächen 126 greifen vollständig in die V-förmigen Gleitflächen 128 ein (siehe hierzu auch die Querschnittsansicht in Fig. 1D). Die Führungsbolzen 121 sind mit der jeweiligen Basisfläche 130 eines Klemmkörpers 124 in Gleit-Kontakt. Die Basisfläche 130 jedes Klemmkörpers 124 erstreckt sich im eingebauten Zustand parallel zu der Längserstreckung des jeweiligen Führungslanglochs 122.

Durch die Anlage der Führungsbolzen 121 an der jeweiligen Basisfläche 130, die gleichzeitige Führung der Führungsbolzen 132, die jeweils auf dem Klemmkörper 124 angeordnet sind, in den entsprechenden Führungslanglöchern 122 und die gleichzeitige Anlage der Klemmflächen 126 an entsprechende Gleitflächen 128 wird eine definierte Führung jedes Klemmkörpers 124 in Richtung des jeweiligen Führungslanglochs 122 sichergestellt. Jeder Klemmkörper 124 wird also in einer Richtung parallel zu seiner Basisfläche 130 verschoben.

Gleichzeitig wird durch diese im Wesentlichen in einem Kreis um die Zentralachse A1 gebildete Anordnung der Klemmkörper 124 erreicht, dass jeder Führungsbolzen 132 in dem ihm zugeordneten Führungslangloch 122 an derselben relativen Position angeordnet ist. Weiter können alle Klemmkörper 124 im Wesentlichen nur gleichzeitig bewegt bzw. verschoben werden.

Je nach aktueller Verschiebeposition der Klemmkörper 124 bzw. deren Führungsbolzen 132 in dem Führungslangloch 122 ändert sich die Größe der oben angegeben Berühr- und Klemmbereiche 126a, 128a. Die Vergrößerung der Längserstreckung der Klemmbereiche 126b geht mit einer Verkleinerung der Berührbereiche 126a, 128a zwischen den Klemmkörpern 124 um denselben Betrag einher. Die maximale Größe wird erreicht, indem die Klemmkörper 124 jeweils parallel zu ihrer Basisfläche 130 so verschoben werden, dass die entsprechenden Führungsbolzen 132 den Führungslanglöchern 122 so weit wie möglich bezogen auf die Zentralachse im Uhrzeigersinn verschoben werden. Durch diese Vergrößerung der Klemmbereiche 126b wird gleichzeitig auch eine Vergrößerung des Umfangs bzw. Durchmessers eines von den Klemmbereichen 126b vollständig umgebenen Durchgangs 133 erreicht. Umgekehrt kann der Umfang bzw. Durchmesser des Durchgangs 133 je nach Länge der Führungslanglöcher 122 bis auf null verkleinert werden, indem die Klemmkörper 124 entgegengesetzt verschoben werden.

Der Durchgang 133 ist entsprechend der Anzahl an Klemmkörpern 122 in der vorliegenden Ausführungsform als gleichseitiges Sechseck ausgebildet und ausschließlich durch die Klemmbereiche 126b definiert. Die maximale Größe des Durchgangs 133 bestimmte sich aus der maximalen Größe der Klemmbereiche 128b. Im Idealfall wäre ein gleichseitiges Sechseck mit einer Seitenlänge, die geringfügig kleiner (beispielsweise 1mm kleiner) als die Länge l1 der Klemmfläche ist, möglich.

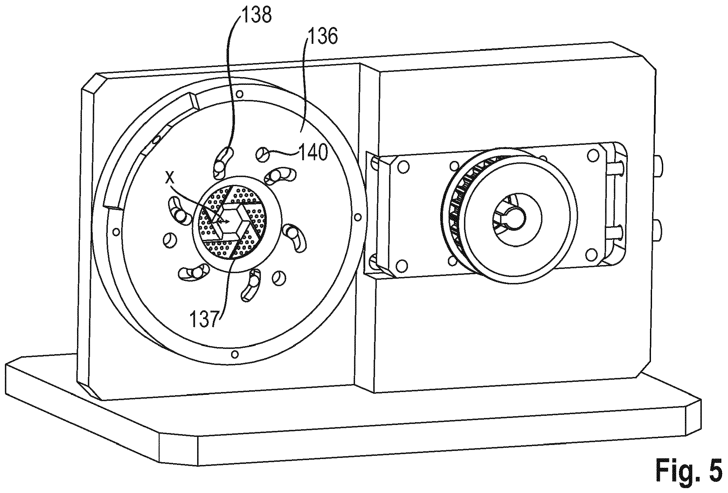

Wie es in Fig. 5 gezeigt ist, wird in einem nächsten Schritt eine Verstelleinrichtung in Form einer Verstellscheibe 136 an der Führungseinrichtung 106 montiert. Die Verstellscheibe 136 ist ein scheibenförmiger Körper. Der Außendurchmesser der Verstellscheibe ist kleiner als D3-(2xb2) und größer als D3-(2xb1), so dass die Innenseite (nicht sichtbar) des Außenrands der Verstellscheibe 136 auf der ringförmigen Stufe 117 gleitend aufliegen kann. Die Dicke der Verstellscheibe 136 ist geringfügig kleiner als die dritte Dicke d3 des zweiten Randbereichs 118, so dass die Verstellscheibe 136 im montierten Zustand nicht über den zweiten Randbereich 118 vorsteht.

Weiter weist die Verstellscheibe 136 ein zentrales Durchgangsloch 137 mit einem Durchmesser, der bevorzugt gleich dem Durchmesser D4 ist, auf, dessen Zentralachse im eingebauten Zustand mit der Zentralachse A1 übereinstimmt. In der Verstellscheibe 136 sind sechs gekrümmte Verstelllanglöcher 138 vorgesehen, die in Umfangsrichtung gleichmäßig verteilt schaufelförmig ausgebildet sind. Die gekrümmten Verstelllanglöcher 138 weisen jeweils einen radial inneren Endbereich 138a und einen radial äußeren Endbereich 138b auf. Der radial innere Endbereich 138a ist radial innerhalb des radial äußeren Endbereichs angeordnet. Der radial innere Endbereich 138a ist über den gekrümmten Mittelbereich 138c des Verstelllanglochs 138 mit dem äußeren Endbereich 138b verbunden. Der gekrümmte Mittelbereich 138c ist in der vorliegenden Ausführungsform bogenförmig ausgebildet. In der vorliegenden Ausführungsform ist jedes gekrümmte Verstelllangloch 138 von radial innen nach außen nach, gesehen in einer Vorderansicht, nach rechts (im Uhrzeigersinn) gekrümmt.

Die gekrümmten Verstelllanglöcher 138 sind so ausgebildet und angeordnet, dass je ein Führungsbolzen 132 jedes Klemmkörpers 124 in je ein gekrümmtes Verstelllangloch 138 eingreift. Jeder Führungsbolzen 132 ist in dem äußeren Endbereich 138b angeordnet ist, wenn er in dem entsprechenden Führungslangloch 122 so weit wie möglich bezogen auf die Zentralachse im Uhrzeigersinn verschoben ist. Umgekehrt ist jeder Führungsbolzen 132 in dem inneren Endbereich 138a angeordnet, wenn er in dem entsprechenden Führungslangloch 122 so weit wie möglich bezogen auf die Zentralachse entgegen dem Uhrzeigersinn verschoben ist. Jeder Führungsbolzen 132 ist in einer Mitte eines Verstelllanglochs 122 angeordnet, wenn er in der Mitte eines entsprechenden Führungslangloches 138 angeordnet ist.

Des Weiteren weist die Verstellscheibe 136 drei um Umfangsrichtung gleichmäßig verteilte Gewindebohrungen 140 auf.

In einem nächsten Schritt wird ein Haltering 142 auf der Vorderseite des zweiten Ringbereichs 118 der Führungseinrichtung 106 montiert. Der Haltering 142 hat den Außendurchmesser D3 und einen Innendurchmesser, der kleiner als (D3-b2), so dass der Innenrand des Halterings 142 nach innen über den Innenrand des zweiten Randbereichs 118 vorsteht, und größer als ein imaginärer Kreis, auf dem die Gewindebohrungen 140 angeordnet sind, ist. Weiter sind vier in Umfangsrichtung gleichmäßig verteilte Durchgangsbohrungen 143 vorgesehen. Zur axialen Lagerung der Verstellscheibe 136 ist der Haltering 142 mittels durch die Durchgangsbohrungen 143 verlaufenden Schraubbolzen 144, die in den Gewindebohrungen 119 fixiert werden, auf der Vorderseite des zweiten Ringbereichs 118 befestigt.

In einem letzten Schritt wird, wie es in Fig. 1A bis 1D gezeigt ist, ein Riemenrad 146 an der Verstellscheibe 136 befestigt. Hierzu werden Schraubbolzen 148 in die Gewindebohrungen 140 eingeschraubt. Das Riemenrad 146 ist daher drehfest mit der Verstellscheibe 136 verbunden.

Aus der oben stehenden Anordnung und Ausbildung des Kabelklemmmechanismus 100 ergibt sich folgende Funktion:

Durch Rotation des Riemenrades 146 wird die mit dem Riemenrad 146 starr verbundene Verstellscheibe 136, die in der Führungseinrichtung 106 drehbar gelagert ist, ebenfalls gedreht.

Durch das Drehen der Verstellscheibe 136 werden die Führungsbolzen 132 der Klemmkörper 124 entlang der radial und in Umfangsrichtung verlaufenden gekrümmten Verstelllanglöcher 138 bezüglich der Mittelachse A1 radial und in Umfangsrichtung überlagert verschoben. Aufgrund der gleichzeitigen Führung der Führungsbolzen 132 in den bezüglich der Basisplatte 12 ortsfesten Führungslanglöchern 122 werden die Klemmkörper 124 zwangsweise derart zueinander und aufeinander verschoben, dass die Klemmbereiche 126b je nach Rotationsrichtung größer oder kleiner werden. Entsprechend wird auch der Umfang bzw. Durchmesser des Durchgangs 133 größer oder kleiner. Durch die Führung in den Führungslanglöchern 122 wird erreicht, dass die Mittelachse (Zentralachse A1) des von den Klemmkörpern 124 bzw.

Klemmflächen 126 vollständig umgebenen Durchgangs 133 bezüglich der Basisplatte 12 nicht verändert wird, während der Umfang bzw. Durchmesser des Durchgangs 133 verändert wird.

In der Ausgestaltung der vorliegenden Ausführungsform erfolgt bei einer Drehung des Riemenrads 146 gesehen in der Vorderansicht im Uhrzeigersinn eine Verkleinerung des Umfangs bzw. Durchmessers des Durchgangs 133. Bei einer solchen Drehung verschieben sich die Führungsbolzen 132 in den Verstelllanglöchem 138 in Richtung der inneren Endbereiche 138a und verschieben sich gleichzeitig die Führungsbolzen 132 in den Führungslanglöchern 122 im Uhrzeigersinn.

Zur Drehung des Riemenrades 146 ist in dem Antriebsvorrichtungsbereich 16 ein Antriebsmotor, beispielsweise ein Elektromotor 22 mit einem Riemenantriebrad 24 angebracht. Insbesondere ist der Motor 22 zusammen mit dem Riemenantriebsrad 24 oder mindestens das Riemenantriebsrad 24 mittels einer Riemeneinstelleinrichtung 26 derart verschiebbar, dass ein Abstand zwischen der Achse der Riemenantriebsscheibe und der Zentralachse A1 zur Verstellung der Riemenspannung einstellbar ist. In der vorliegenden Ausführungsform ist der Elektromotor 22 an einer Verschiebeplatte 30 befestigt. Die Verschiebeplatte 30 ist wiederum in einer entsprechenden Aussparung 32 der Basisplatte 12 auf die Zentralachse A1 zu und von dieser weg verschiebbar gelagert. Mittels Einstellbolzen 34 kann der gewünschte Abstand eingestellt werden.

Zur Übertragung einer Rotation des Elektromotors 22 auf das Riemenrad 146 ist ein Zahnriemen 28 auf das Riemenantriebsrad 24 und das Riemenrad 146 aufgespannt. Eine Einstellung der Riemenspannung erfolgt über die Einstellbolzen 34.

Die oben angegebene Kabelhaltevorrichtung 20, die auf der Rückseite des Durchgangs vorgesehen ist, weist zwei beispielsweise pneumatisch betätigte Kabelhaltebacken 36 auf (siehe beispielsweise Figs. 1B, 1C und 1D). Diese können zwischen sich ein Kabel derart festhalten, dass ein Kabelende so gehalten wird, dass es im Wesentlichen auf der Zentralachse durch den Durchgang 133 hindurch verläuft.

Im Betrieb der Kabelklemmvorrichtung 10 für die Aufweitung von Schirmgeflechten wird ein Kabelende (nicht gezeigt), dessen äußere Isolierung bereits entfernt wurde, durch den geöffneten Durchgang 133 (nach Rotation der Verstellscheibe 136 entgegen Uhrzeigersinn) so hindurch geführt, dass ein Kabelende ohne äußere Isolierung mit einer gewünschten Länge auf der Vorderseite des Durchgangs 133 vorsteht. Nach dem Schließen der Kabelhaltebacken 36 der Kabelhaltevorrichtung 20 ist das Kabelende in dieser Position bezüglich der Basisplatte 12 fixiert.

In einem nächsten Schritt wird der Motor 22 derart betätigt, dass der Umfang bzw. Durchmesser des Durchgangs 133 verringert wird (hier im Uhrzeigersinn gedreht). Dies kann durch Rotation des Riemenrads 146 bzw. der Riemenantriebsrads 24 um einen vorbestimmten Betrag, der beispielsweise in eine in Fig. 1B gezeigte Steuervorrichtung 32 eingegeben wird, erfolgen. Alternativ kann aus kabelspezifischen Daten, wie beispielsweise dem Durchmesser des Innenleiters einschließlich seiner Isolation, durch die Steuervorrichtung 32 ein vorbestimmter Rotationsbetrag errechnet werden. Weiter alternativ kann durch die Steuervorrichtung 32 eine widerstandsabhängige Rotation erreicht werden, bei der das Riemenrad 146 so lange gedreht wird, bis ein vorbestimmtes maximales Drehmoment erreicht wird. Das maximale Drehmoment kann ebenfalls basierend auf Kabelkennwerten errechnet oder eingegeben werden.

Mit der gleichmäßigen Verkleinerung des Durchmessers bzw. Umfangs des Durchgangs 133 wird nun auf das auf der Isolierung des Innenleiters aufliegende und freiliegende Schirmgeflecht durch die Kante 127 der umgekehrt V-förmigen Klemmfläche 126 eine radial nach innen gerichtete Kraft aufgebracht, durch die das Schirmgeflecht zusammengedrückt und/oder mindestens teilweise in das Isolationsmaterial des ersten Leiters eingedrückt wird, so dass der zur Vorderseite vorstehende Endteil des Schirmgeflechts von dem Isolationsmaterial unter Aufweitung seines Umfangs radial nach außen abgehoben und aufgespreizt wird. Aufgrund der gleichmäßigen radialen Umfangs- bzw. Durchmesserverringerung des Durchgangs 133 von sechs Seiten erfolgt auch das Aufbringen der Kraft auf das Schirmgeflecht besonders gleichmäßig. Des Weiteren ermöglicht das Ineinandergreifen der jeweiligen Klemmfläche 126 in die Gleitfläche 128, dass ein Einklemmen von Drähten des Schirmgeflechts zwischen den einzelnen Klemmkörpern 124 weitestgehend vermieden wird.

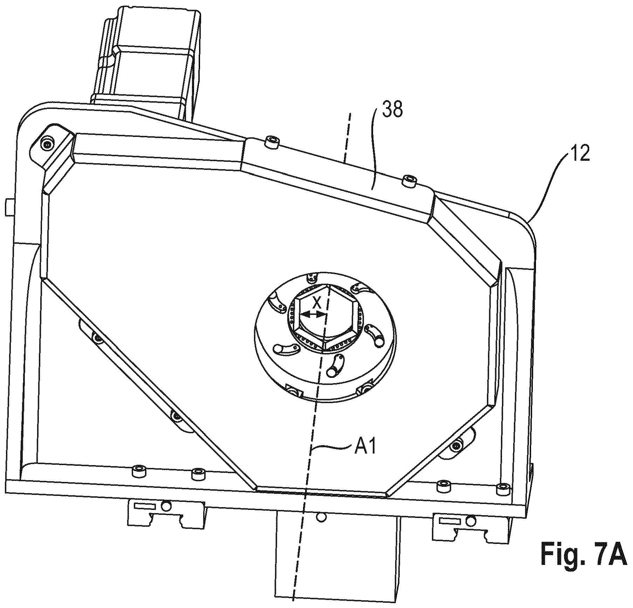

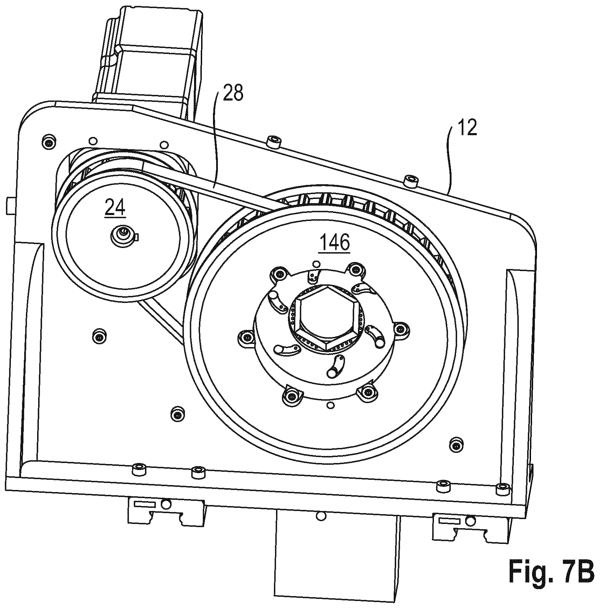

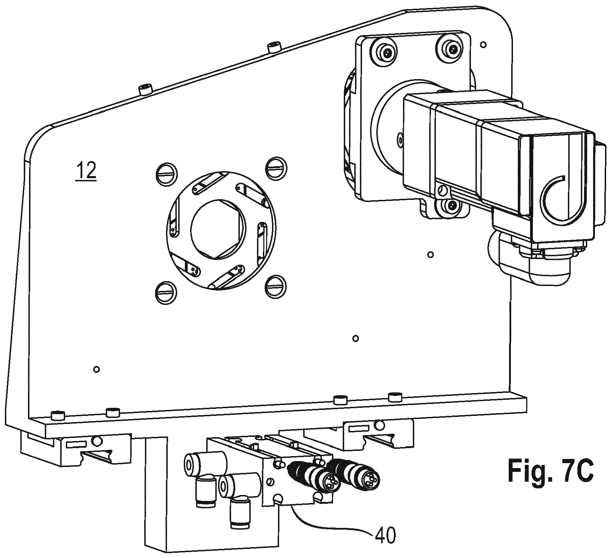

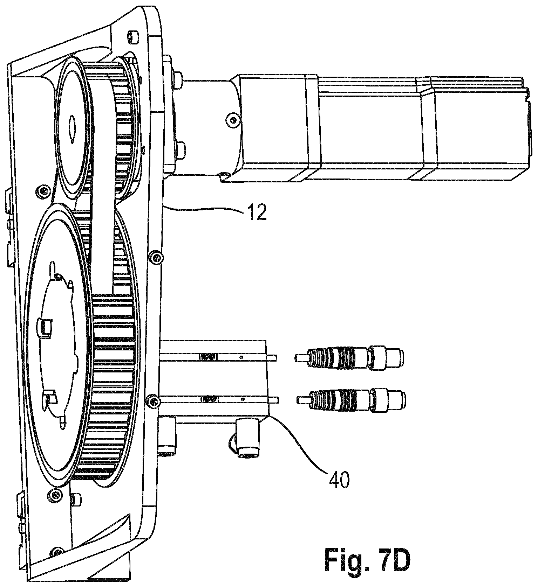

Die Kabelklemmvorrichtung gemäß der zweiten Ausführungsform wird anhand der Figuren 7 bis 11 beschrieben. Die Kabelklemmvorrichtung gemäß der zweiten Ausführungsform ist im Wesentlichen gleich zu der Kabelklemmvorrichtung der ersten Ausführungsform ausgebildet und arbeitet auf dieselbe Weise. Es werden daher nur die Unterschiede zu der ersten Ausführungsform beschrieben. Gleiche oder ähnliche Bauteile werden mit denselben oder ähnlichen Bezugszeichen bezeichnet. Auf eine Beschreibung gleicher oder ähnlicher Bauteile wird weitestgehend verzichtet.

Fig. 7A zeigt die vollständig zusammengebaute Kabelklemmvorrichtung gemäß der zweiten Ausführungsform. Wie aus Fig. 7A ersichtlich ist, ist an der Basisplatte 12 eine Abdeckung 38 angebracht, die zur Abdeckung des Riemenantriebsrads 24, des Riemenrads 146 und des Zahnriemens (schematisch gezeigt) dient.

Die Figuren der zweiten Ausführungsform zeigen keine Kabelhaltevorrichtung obwohl diese ebenfalls vorgesehen sein kann. Eine entsprechende Konsole 40, die zur Anbringung derselben dienen kann, ist bereits vorhanden.

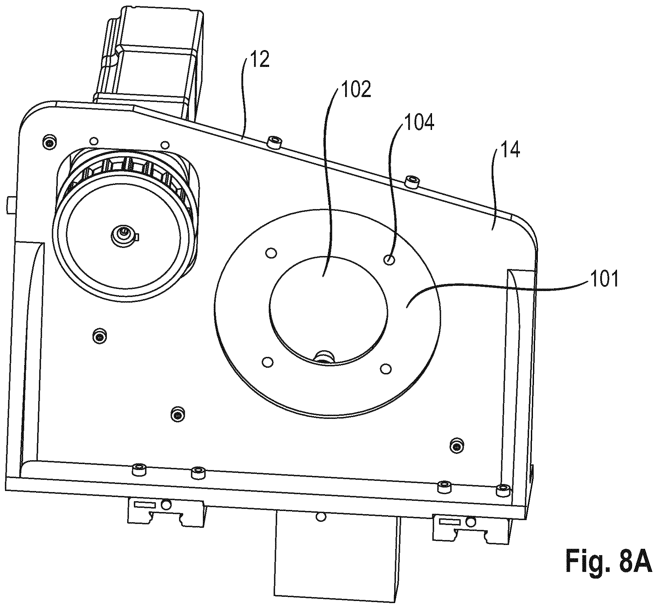

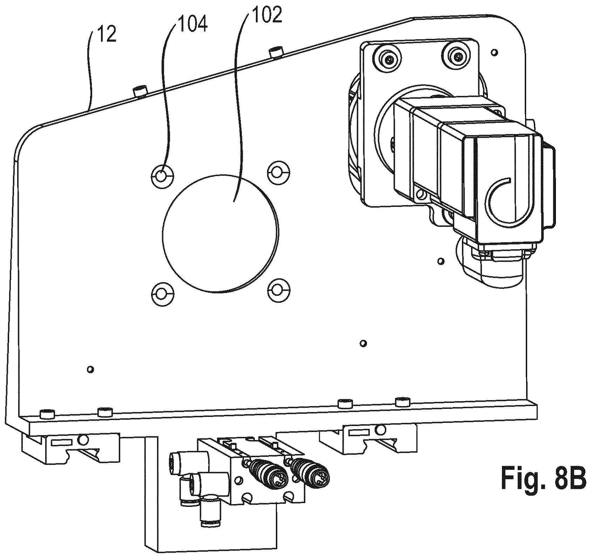

Wie es aus Fig. 8A ersichtlich ist, weist die Basisplatte 12 in ihrem Kabelklemmmechanismusbereich 14 auf ihrer Vorderseite anders als die erste Ausführungsform einen ringförmigen vertieften Aufnahmebereich 101 auf, der koaxial zu dem Durchgangsloch 102 durch die Basisplatte 12 ausgebildet ist.

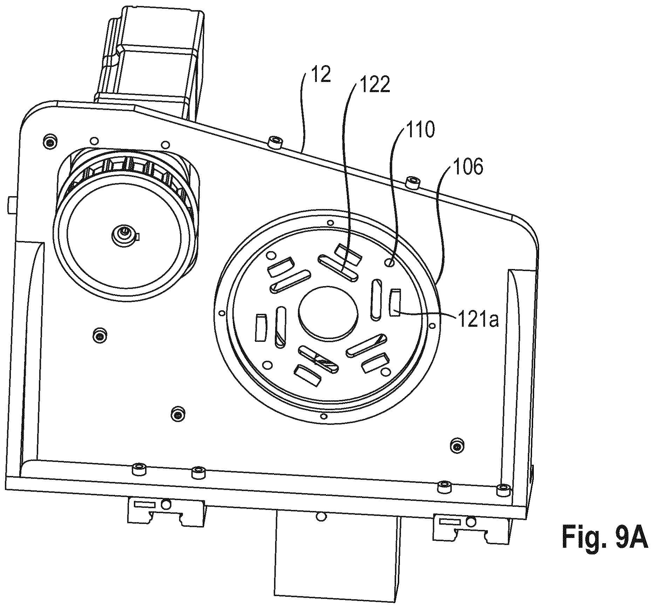

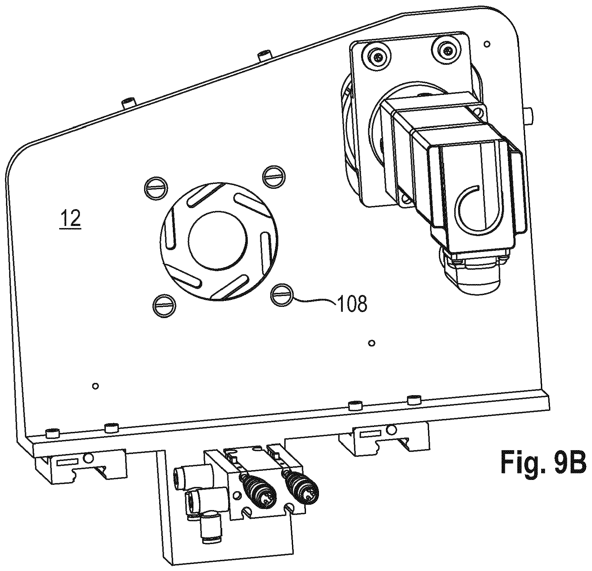

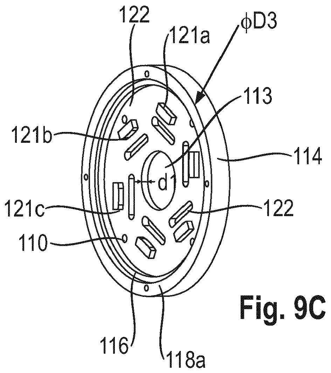

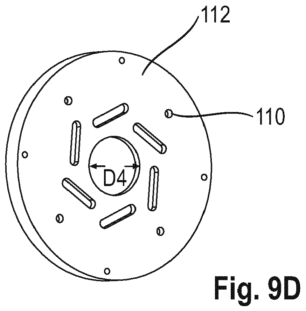

Wie es aus Fig. 9A ersichtlich ist, ist der Aufnahmebereich 101 ist dazu ausgebildet, dass die Rückseite einer Führungseinrichtung 106 in diese eingesetzt ist. Fig. 9C und 9D zeigen die Vorder- und Rückseite der Führungseinrichtung 106, die sich ebenfalls geringfügig von der der ersten Ausführungsform unterscheidet, im nicht-montierten Zustand. Die Führungseinrichtung 106 ist im Wesentlichen aus einem scheibenförmigen Grundkörper 112 mit einem Außendurchmesser D3, der größer als der Durchmesser D1 ist, und einer ersten Dicke d1 ausgebildet. In dem scheibenförmigen Grundkörper 112 ist ein zentrales Durchgangsloch 113 mit einem Durchmesser D4, der kleiner als der Durchmesser D1 ist, vorgesehen. Im eingebauten Zustand stimmt eine Zentralachse durch das Durchgangsloch 113 mit der Zentralachse A1 überein. In Umfangsrichtung gleichmäßig verteilt sind auf einem imaginären Kreis vier erste Gewindebohrungen 110 vorgesehen. Im eingebauten Zustand sind die Gewindebohrungen 110 mit den Durchgangsbohrungen 104 ausgerichtet.

Des Weiteren weist der scheibenförmige Grundkörper 112 der zweiten Ausführungsform, wie auch der Grundkörper 112 der ersten Ausführungsform sechs geradlinige um die Zentralachse A1 angeordnete Führungslanglöcher 122 auf. Jedes Führungslangloch 122 weist die erste vorbestimmte Länge c auf und verläuft in einer vorbestimmten Richtung. Imaginäre Verlängerungen benachbarter Führungslanglöcher schneiden sich in einem Winkel $\beta$ = 120° zueinander.

Die Mittelpunkte der Führungslanglöcher 122 sowie die Anordnung der Führungslöcher zueinander und auf dem Grundkörper 112 entspricht im Wesentlichen der ersten Ausführungsform.

Anders als bei der ersten Ausführungsform sind, wie es insbesondere aus den Fig. 9A und 9C ersichtlich ist, statt der radial außerhalb der Führungslanglöcher vorgesehenen Passbohrungen 120 und der darin vorgesehenen Führungsbolzen 121 radial außerhalb jedes der Führungslanglöcher 122 in Umfangsrichtung gleichmäßig verteilte Führungsvorsprünge 121a vorgesehen. Die Führungsvorsprünge 121a stehen zu der Vorderseite des Grundkörpers mit einer Höhe, die bevorzugt im Wesentlichen der Dicke d1 der Klemmkörper 124 entspricht, vor. Die radial inneren Seiten der Führungsvorsprünge 121a weisen jeweils eine parallel zu den Führungslanglöchern 122 verlaufende Gleitfläche 121b auf. Die Enden 121c der Gleitfläche 121b sind weg von dem entsprechenden Führungslangloch 122 geneigt. Die Führungsvorsprünge 121a sind parallel und zentral bezüglich der Führungslanglöcher 122 ausgebildet.

Alternativ zu einer integralen Ausbildung der Führungsvorsprünge 121a mit dem Grundkörper 112 kann jeder Führungsvorsprung als Führungsfeder ausgebildet sein, die in eine entsprechende Aussparung bzw. Vertiefung in dem Grundkörper 112 eingesetzt wird.

Im Bereich des Umfangsrands des Grundkörpers 112 ist auf der in Fig. 9C gezeigten Vorderseite des Grundkörpers 112 ein stufenförmiger, ringförmiger Randbereich 114 entsprechend der ersten Ausführungsform ausgebildet, mit der Ausnahme, dass der zweite Ringbereich 118a der zweiten Ausführungsform durchgängig, d.h. nicht unterbrochen, ausgebildet ist.

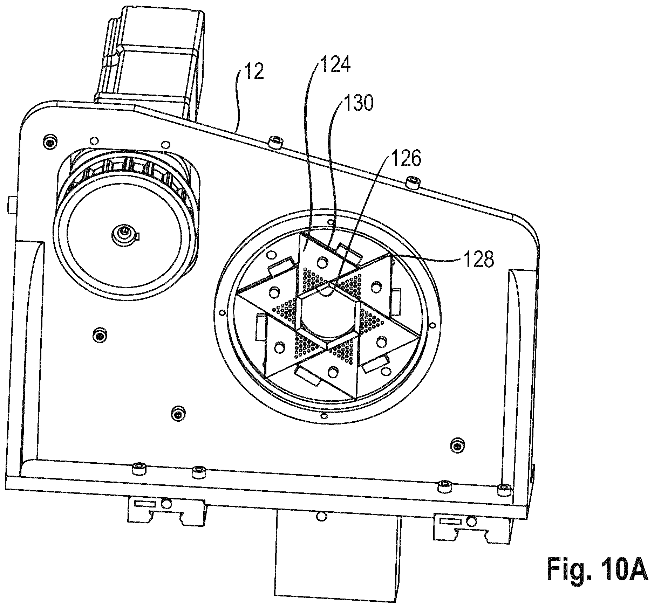

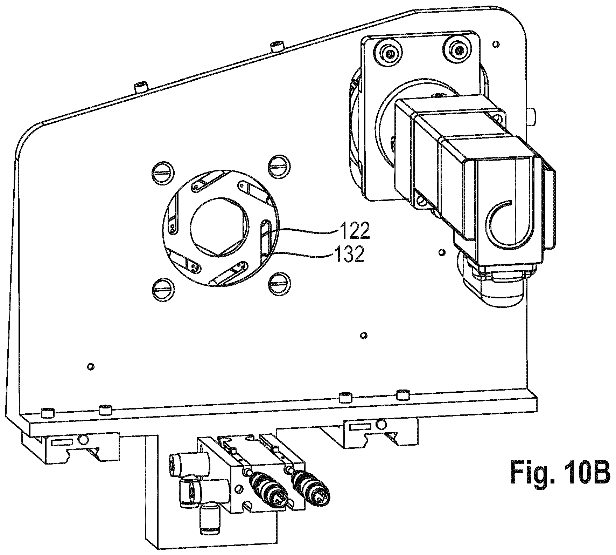

Die Anordnung und Ausbildung der in den Fig. 10A und 10B gezeigten Klemmkörper 124 der zweiten Ausführungsform entspricht im Wesentlichen der der ersten Ausführungsform. Anders als in der ersten Ausführungsform werden die Basisflächen 130 der Klemmkörper 124 durch die Berührung mit den Gleitflächen 121b der Führungsvorsprünge 121a geführt.

Durch die Anlage der Gleitflächen 121b an der Basisfläche 130, die gleichzeitige Führung des Führungsbolzens 132, der auf dem Klemmkörper 124 angeordnet ist, in einem entsprechenden Führungslangloch 122 und die gleichzeitige Anlage der Klemmflächen 126 an entsprechende Gleitflächen 128 wird eine definierte Führung jedes Klemmkörpers 124 in Richtung des jeweiligen Führungslanglochs 122 sichergestellt. Jeder Klemmkörper 122 wird, wie auch in der ersten Ausführungsform im Wesentlichen in einer Richtung parallel zu seiner Basisfläche 130 verschoben. Die geneigten bzw. abgeschrägten Enden 121c der Gleitflächen 121b dienen dazu, ein Verkanten bei einem eventuell auftretendem Verkippen der Klemmkörper 126 zu verhindern.

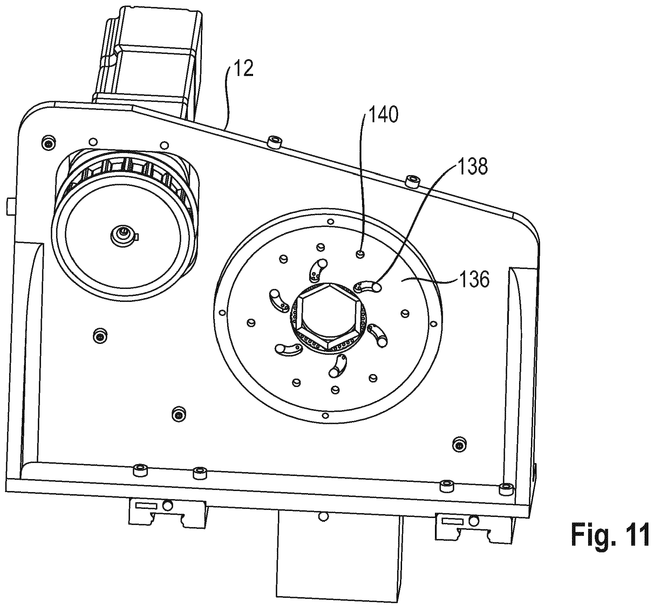

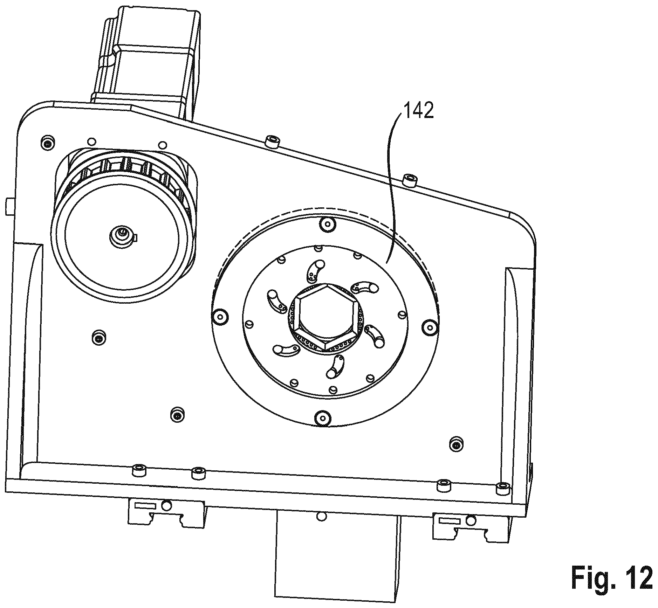

Wie es aus den Fig. 11 und 12 ersichtlich ist, entspricht der Aufbau und die Anordnung der Verstellscheibe 136 und des Halterings 142 im Wesentlichen der ersten Ausführungsform.

Das an der Verstellscheibe 136 angebrachte Riemenrad 146 (siehe Fig. 7B), welches dazu angepasst ist, eine Rotationsbewegung auf die Verstellscheibe 136 zu übertragen, entspricht im Wesentlichen ebenfalls dem Riemenrad 146 der ersten Ausführungsform.

In den Figuren, die die zweite Ausführungsform zeigen, ist die Kabelklemmvorrichtung gemäß der zweiten Ausführungsform in ihrer am meisten geöffneten Position. D.h., der von den Klemmkörpern 124 umgebene Durchgang 133 hat seine maximale Umfangs- und Durchmessergröße und die mit den Klemmkörpern 124 fest verbundenen Führungsbolzen 132 sind sowohl in den Führungslanglöchern 122 in der Führungseinrichtung 106 (Grundkörper 112) als auch in den gekrümmten Langlöchern 138 der Verstellscheibe in den entsprechenden Endbereichen (Endbereiche am weitesten vom Mittelpunkt des Durchgangs 133 entfernt) angeordnet.

Selbstverständlich können viele Modifizierungen vorgenommen werden, ohne den Gegenstand der vorliegenden Erfindung zu verlassen. Die Anzahl der Klemmkörper beträgt mindestens drei und ist nach oben im Wesentlichen offen. Entscheidend ist, dass jeder Klemmkörper eine Klemmfläche und eine Gleitfläche aufweist, die in einem Eckbereich des Klemmkörpers aneinander angrenzen und in einem ersten vorbestimmten Winkel $\alpha$ (siehe Fig. 4A) zueinander verlaufen. Der erste vorbestimmte Winkel $\alpha$ berechnet sich aus der Formel (1): $\alpha$ = 360°/N, wobei N die Anzahl der insgesamt vorgesehenen Klemmkörper ist. Durch die Anzahl N wird auch die Form des Durchgangs 133 bestimmt, der als gleichseitiges N-Eck ausgebildet ist. Die Reihenfolge von Klemmfläche und Gleitfläche im Uhrzeigersinn oder gegen Uhrzeigersinn ist beliebig. Bei Anordnung von Klemmfläche und Gleitfläche in der genannten Reihenfolge im Uhrzeigersinn erfolgt ein Verkleinern des Umfangs des Durchgangs durch Drehen der Verstellscheibe im Uhrzeigersinn. Bei entsprechend umgekehrter Anordnung von Klemmfläche und Gleitfläche und der entsprechenden Langlöcher erfolgt eine Verringerung bei entsprechender Drehung entgegen dem Uhrzeigersinn.

Die Klemmkörper sind nicht auf die Ausbildung als Dreiecke, insbesondere als gleichseitige Dreiecke, beschränkt. Beispielsweise können in dem Fall, in dem insgesamt nur drei Klemmkörper vorgesehen sind, auch Sechsecke verwendet werden, in dem Fall, in dem insgesamt vier Klemmkörper vorgesehen sind, Rechtecke bzw. Quadrate verwendet werden. In dem Fall, in dem insgesamt mehr als vier Klemmkörper verwendet werden, bilden die Klemmfläche und die Gleitfläche immer einen spitzen Winkel miteinander, so dass die verwendeten Klemmkörper zumindest diesen spitzwinkligen Bereich aufweisen müssen. Bevorzugt sind alle Klemmkörper gleich/identisch ausgebildet. Die Führungslanglöcher sind bevorzugt so ausgebildet, dass sie sich parallel zu einer Basis eines imaginären gleichschenkligen Dreiecks bewegen.

Die Anordnung bzw. Ausbildung der Führungslanglöcher 124 in dem scheibenförmigen Grundkörper 112 der Führungseinrichtung 106 ergibt sich zwangsläufig aus folgenden Randbedingungen:
Jedes Führungslangloch 122 ist in seiner Längserstreckung derart ausgerichtet, dass eine imaginäre Linie, die sich in der Richtung der Längserstreckung der Klemmfläche 126 eines Klemmkörpers 124 erstreckt und eine imaginäre Linie, die sich in der Richtung der Längserstreckung der Führungslanglöcher 122, die dem entsprechenden Klemmkörper 124 zugeordnet sind, erstreckt, sich in einem Winkel $\gamma$ (siehe Fig. 4B) schneiden. Der Winkel $\gamma$ wird mit folgender Formel (2) bestimmt: $\gamma = (180° - (360°/N))/2$. Wenn der Klemmkörper ein gleichschenkliges Dreieck ist bzw. die Klemmflächen und die Gleitflächen ein imaginäres gleichschenkliges Dreieck bilden, ist die Längserstreckung der Basisfläche 130 parallel zu der des Führungslanglochs 122.

Ein erster Endpunkt eines Führungslangloches bestimmt sich beispielsweise daraus, dass, wenn der Führungsbolzen mit diesem Endbereich in Anlage kommt, der Spitzenendbereich des Klemmkörpers, in dem die Klemmfläche und die Gleitfläche aneinander angrenzen, möglichst nahe der Zentralachse angeordnet sind. Bevorzugt ist der Spitzenendbereich im Wesentlichen in der Zentralachse angeordnet. Der andere Endpunkt des Führungslangloches bestimmt sich beispielsweise daraus, dass der Berührbereich, in dem sich zwei Klemmkörper berühren, möglichst klein ist. In diesem Zustand sind die Spitzenendbereiche am weitesten entfernt von der Zentralachse angeordnet.

Eine Länge jedes Führungslangloches, bei der eine maximale Änderung des Durchmessers unter voller Ausnutzung der gesamten Länge a der Klemmfläche möglich ist, bestimmt sich aus der folgenden Formel (3):

$$c = \sqrt[2]{2a^2(1 - \cos\alpha)},$$

wobei a die Länge der Klemmfläche ist.

Weiter lässt sich beispielsweise über den Abstand x (siehe Fig. 4) jeder Klemmfläche zu dem Mittelpunkt des Durchgangs eine Führungslöchlänge c1 (siehe Fig. 4) über die Formel (4):

$$c1 = \frac{x}{\sin(\frac{(180° - \alpha)}{2})},$$

bestimmen, die ausgehend von diesem Zustand (Abstand x) notwendig ist, damit der Durchmesser des Durchgangs auf null verkleinert werden kann.

Die einzelnen Klemmkörper sind normalerweise so angeordnet, dass sich die jeweiligen Spitzen der Klemmkörper, in der die Gleitfläche und die Klemmfläche sich treffen bzw. schneiden, geradlinig und sternförmig auf einen gemeinsamen Punkt zubewegen, Der gemeinsame Punkt ist normalerweise der Mittelpunkt des Durchgangs 133.

Es versteht sich von selbst, dass die Klemmflächen bzw. Gleitflächen nicht V-förmig sein müssen. Sie können beispielsweise auch als eine einzige ebene Fläche oder als W-förmige Fläche ausgebildet sein. Die Anzahlen der genannten Durchgangsbohrungen und Gewindelöcher in der Basisplatte, der Führungseinrichtung und der Verstelleinrichtung können beliebig variiert werden und sind nicht auf die beispielhaft beschriebene Anzahl beschränkt.

Die Führungsbolzen können je nach Ausbildung der Führungslanglöcher und der Verstelllanglöcher an beliebigen Positionen auf den Klemmkörpern und auch an verschiedenen Position auf der Vorder- und Rückseite jedes Klemmkörpers angeordnet sein. Jeder Klemmkörper kann auch mit mehreren Führungsbolzen in mehreren Führungslanglöchern in der Führungseinrichtung geführt sein.

Der Verstelleinrichtung kann auch derart ausgebildet sein, dass nicht alle oder auch nur ein einzelner Klemmkörper direkt mittels des Verstelleinrichtung verstellt/verschoben wird. In diesem Fall werden die übrigen Klemmkörper durch die Zwangsführung bei Verschiebung des einen Klemmkörpers auch mit verschoben. Ein oder mehrere Klemmkörper können auch durch Mittel, die anders als die Verstellscheibe ausgebildet sind, angetrieben werden. Insbesondere kann beispielsweise ein linearer Antrieb in den Führungslanglöchern erfolgen.

Der Riemenantrieb kann beispielsweise durch einen Kettenantrieb oder Direkt-Zahnradantrieb ersetzt sein.

Der Motor und der Kabelklemmmechanismus müssen nicht auf einer gemeinsamen Basisplatte angebracht sein.

Zur weiteren Verkleinerung des axialen Bauraums könnte das Riemenrad topfförmig ausgebildet sein und die Verstelleinrichtung und die Führungseinrichtung umfangsmäßig umgreifen.

Die Reihenfolge des Zusammenbaus kann beliebig variiert werden.

Aufeinander gleitende Teile können mit speziellen Lagern, wie beispielsweise Kugellagern versehen werden, um ein Gleiten der Bauteile aufeinander zu erleichtern. Beispielsweise können in dem Grundkörper 112, genauer der ringförmigen Stufe 117 Kugellager oder Zylinderlager derart angeordnet sein, dass die Verstellscheibe 136 über dieselben auf der ringförmigen Stufe 117 gelagert ist.

Die Passbohrungen können durch Gewindebohrungen ersetzt werden, in die entsprechende Gewindebolzen eingesetzt werden. Die Gewindebohrungen können durch Passbohrungen ersetzt werden, in die entsprechende Passbolzen eingesetzt werden.

Der Durchmesser D1 der kreisförmigen Öffnung 102 in der Basisplatte 12 ist bevorzugt zwischen 10mm und 200mm, noch bevorzugter zwischen 20mm und 100mm, wie beispielsweise 50mm.

Der Durchmesser D2 des imaginären Kreises, auf dem die Durchgangsbohrungen 104 in der Basisplatte 12 liegen, ist bevorzugt zwischen 20mm und 250mm, noch bevorzugter zwischen 30mm und 110mm, wie beispielsweise 70,7mm.

Der Außendurchmesser D3 des Grundkörpers 112 der Führungseinrichtung 106 ist bevorzugt zwischen 50mm und 300mm, noch bevorzugter zwischen 90mm und 200mm, wie beispielsweise 96mm.

Der Durchmesser D4 des zentralen Durchgangsloches 113 durch den Grundkörper 112 der Führungseinrichtung 106 ist bevorzugt zwischen 10mm und 200mm, noch bevorzugter zwischen 20mm und 100mm, wie beispielsweise 25mm.

Der Durchmesser D5 des imaginären Kreises, auf dem die Gewindebohrungen 110 in der Basisplatte 12 liegen, ist bevorzugt zwischen 20mm und 250mm, noch bevorzugter zwischen 50mm und 150mm, wie beispielsweise 70,7mm.

Die Breite b1 des ersten Ringbereichs 116 ist bevorzugt zwischen 3mm und 15mm, noch bevorzugter zwischen 5mm und 10mm, wie beispielsweise 8mm.

Die Breite b2 des zweiten Ringbereichs 118, 118a ist bevorzugt zwischen 2mm und 10mm, noch bevorzugter zwischen 4mm und 8mm, wie beispielsweise 5,5mm.

Die Dicke d1 des Grundkörpers 112 der Führungseinrichtung 106 ist bevorzugt zwischen 2mm und 50mm, noch bevorzugter zwischen 2,5mm und 20mm, wie beispielsweise 3mm.

Die Dicke d2 des ersten Ringbereichs 116 ist, in Abhängigkeit von der Dicke der Klemmkörper, bevorzugt zwischen 2mm und 40mm, noch bevorzugter zwischen 2,5mm und 20mm, wie beispielsweise 3mm.

Die Dicke d3 des zweiten Ringbereichs 118, 118a ist bevorzugt zwischen 2mm und 30mm, noch bevorzugter zwischen 2,5mm und 20mm, wie beispielsweise 3mm.

Die Dicke d4 der Klemmkörper 124 ist bevorzugt zwischen 2mm und 40mm, noch bevorzugter zwischen 2,5mm und 20mm, wie beispielsweise 3mm.

Der Abstand a1 zwischen der Passbohrungen 120 bzw. Gleitfläche 121b und dem Führungslangloch 122 ist bevorzugt zwischen 3mm und 100mm, noch bevorzugter zwischen 4mm und 30mm, wie beispielsweise 6mm.

Die Länge l1 der Klemmfläche 126 und der Gleitfläche 128 ist bevorzugt zwischen 5mm und 200mm, noch bevorzugter zwischen 8mm und 30mm, wie beispielsweise 11mm.

Als Material für die Kabelklemmvorrichtung kann bevorzugt Metall verwendet werden.

Bezüglich des Durchgangs 133, der tatsächlich die Form eines gleichseitigen Vielecks (Polygons) aufweist, bedeutet der Ausdruck "Umfang" einen Kreis, der alle Eckpunkte des Polygons umschreibt. Ähnlich meint der Ausdruck "Durchmesser" bezüglich des Durchgangs 133 den Abstand oder die breite zwischen gegenüberliegenden Eckpunkten.

Es wird explizit betont, dass alle in der Beschreibung und/oder den Ansprüchen offenbarten

Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

Im Folgenden werden noch weitere Aspekte der vorliegenden Offenbarung angegeben.

1. Kabelklemmvorrichtung zur Aufweitung von Schirmen von Kabeln, mit mindestens drei Klemmkörpern (124), die dazu ausgebildet sind, einen von denselben vollständig umgebenen Durchgang (133) auszubilden, bei der die Klemmkörper (124) zum Ändern der Größe des Umfangs des Durchgangs (133) aufeinander gleitbar sind.

2. Kabelklemmvorrichtung nach Aspekt 1, bei der mindestens drei Klemmkörper (124) vorgesehen sind, jeder Klemmkörper (124) mindestens eine Klemmfläche (126) und eine Gleitfläche (128) aufweist,

die Klemmfläche (126) und die Gleitfläche (128) von jedem der Klemmkörper (124) aneinander angrenzen und in einem ersten vorbestimmten Winkel α, der kleiner 180° ist, zueinander verlaufen,

die Klemmkörper (124) so zueinander angeordnet sind, dass jeweils die Klemmfläche (126) eines der Klemmkörper (124) bereichsweise mit der Gleitfläche (128) eines benachbarten Klemmkörpers (124) und die Gleichfläche (128) des einen Klemmkörpers (124) bereichsweise mit der Klemmfläche (126) eines anderen benachbarten Klemmkörpers (124) aufeinander gleitbar in Berührung ist,

durch mindestens Klemmbereiche (126b) jeder der Klemmflächen (126), die jeweils nicht in Berührung mit den Gleitflächen (128) benachbarter Klemmkörper (124) sind, der von diesen Klemmbereichen (126b) vollständig umgebene Durchgang (133) ausgebildet wird,

die Größe des Umfangs und/oder Durchmessers des Durchgangs (133) zum Klemmen eines Kabels zum Aufweiten eines Schirms durch Bewegen der Klemmkörper (124) derart, dass die Klemmflächen (126) jeweils bezüglich der sie jeweils berührenden Gleitflächen (128) verschoben werden, verstellbar ist.

3. Kabelklemmvorrichtung nach Aspekt 2, bei der
die Größe des Umfangs des Durchgangs (133) durch Bewegen der Klemmkörper (124) derart, dass die Klemmflächen (126) bezüglich der sie jeweils berührenden Gleitflächen (128) jeweils um den gleichen Betrag und die gleiche relative Richtung verschoben werden, verstellbar ist.

4. Kabelklemmvorrichtung nach einem der Aspekte 2 oder 3, bei der
der erste vorbestimmte Winkel α = (360°)/N beträgt, wobei N die Anzahl der Klemmkörper (124) ist.

5. Kabelklemmvorrichtung nach einem der Aspekte 2 bis 4, bei der
bezogen auf ein bezüglich der Kabelklemmvorrichtung insgesamt feststehendes Koordinatensystem, jeder Klemmkörper (124) zum Verkleinern der Größe des Umfangs und/oder Durchmessers des Durchgangs (133) zum Klemmen des Kabels zum Aufweiten des Schirms in einer Richtung bewegt wird, die um γ = -(180°-360°/N)/2, wobei N die Anzahl der Klemmkörper (124) ist, in Bezug zu einer Richtung geneigt ist, die durch die Längserstreckung Klemmfläche (126) ausgehend von dem Schnittpunkt der Klemmfläche (126) mit der Gleitfläche (128) eines einzelnen Klemmkörpers (124) definiert ist, und/oder
jeweils benachbarte Klemmkörper (124) in einem Winkel β = ((N-2)x180°)/N zueinander bewegt werden.

6. Kabelklemmvorrichtung nach einem der Aspekte 2 bis 5, die weiter aufweist:
eine Führungseinrichtung (106) mit N ersten geradlinigen Führungslanglöchern (122) befestigt ist,
bei der
jedes Führungslangloch (122) in dem Winkel β zu der jeweils benachbarten Führungslangloch (122) verläuft,
jeder Klemmkörper (124) einen Führungsbolzen (132) aufweist, mit dem er jeweils in einem dem Klemmkörper (124) zugeordneten Führungslangloch (122) in Längsrichtung des Führungslangloches (122) ohne Rotation des Klemmkörpers (124) bezüglich des Führungslanglochs (122) oder um sich selbst gleitbar ist, und
die Führungslanglöcher (122) so ausgebildet sind, dass der Umfang und/oder Durchmesser des Durchgangs (133) durch gleichzeitiges Verschieben aller Führungsbolzen (132) in den Führungslanglöchern (122) ohne Veränderung einer durch das Durchgangsloch (133) verlaufenden Zentralachse (A1) bezüglich der Führungseinrichtung (106) veränderbar ist.

7. Kabelklemmvorrichtung nach Aspekt 6, die weiter aufweist:
eine um die Zentralachse (A1) des Durchgangslochs (133) drehbare Verstellscheibe (136) mit N gekrümmten Verstelllanglöchem (138),
bei der
jeder Klemmkörper (124) einen zweiten Führungsbolzen (121) aufweist, der jeweils in einem ihm zugeordneten gekrümmten Verstelllangloch (138) verschiebbar ist, und
eine Rotation der Verstellscheibe (136) bezüglich der Führungseinrichtung (106) dazu führt, dass die Klemmkörper (124) entlang der Führungslanglöcher (122) der Führungseinrichtung (106) verschoben werden.

8. Kabelklemmvorrichtung nach Aspekt 7,
bei der
die Führungseinrichtung (106) mindestens in einer ersten Ebene senkrecht zu der durch das Durchgangsloch (133) verlaufenden Zentralachse (A1) angeordnet ist,
die Verstelleinrichtung (136) mindestens in einer dritten Ebene angeordnet ist, die parallel zu der ersten Ebene ist, und
die Klemmkörper (124) in einer zweiten Ebene angeordnet sind, die parallel zu der ersten Ebene und zwischen der ersten und dritten Ebene ist.

9. Kabelklemmvorrichtung nach einem der Aspekte 2 bis 8,
bei der jede Klemmfläche (126) umgekehrt V-förmig zum Ausbilden einer in Längsrichtung der Klemmfläche (126) verlaufenden geraden Kante (127) ausgebildet ist und jede Gleitfläche (128) eine V-förmige geradlinige Nut so ausbildet, dass die so ausgebildeten und aufeinander gleitenden Klemmflächen (126) und Gleitflächen (128) benachbarter Klemmkörper (124) ineinandergreifen.

10. Kabelklemmvorrichtung nach einem der Aspekte 1 bis 9, bei der
jeder Klemmkörper (122) ein gleichschenkliges Dreieck oder zumindest einen Bereich ausbildet, in den ein imaginäres gleichschenkliges Dreieck hineingelegt werden kann, dessen Schenkel die Klemmfläche (126) und Gleitfläche (128) ausbilden, und
die Bewegungsrichtung jedes Klemmkörpers (124) zum Verkleinern des Umfangs und/oder Durchmessers des Durchgangs (133) parallel zu und in derselben Richtung wie die Erstreckungsrichtung der Basis des gleichschenkligen Dreiecks ausgehend von dem Schnittpunkt der Basis mit der Gleitfläche (128) ist.

11. Vorrichtung zum umfangsmäßigen Klemmen eines Kabels zum Aufweiten eines Schirm des Kabels, mit mindestens einem ersten, zweiten und dritten Klemmkörper, von denen jeder mindestens eine Klemmkante und eine Gleitkante aufweist,
bei der die Klemmkörper in einer im wesentlichen kreisförmigen Anordnung so angeordnet sind, dass die Klemmkante des ersten Klemmkörpers in begleitender Berührung mit der Gleitkante des zweiten Klemmkörpers und die Klemmkante des zweiten Klemmkörpers in gleitender Berührung mit der Gleitkante des dritten Klemmkörpers ist, und ein Durchgang, der einen Mittelpunkt hat, durch einen Bereich jeder der Klemmkanten ausgebildet wird, der am nächsten zu dem Mittelpunkt liegt,
ein Abstand zwischen dem Mittelpunkt und einem Außenumfang des Durchgangs zwischen einer ersten Länge und einer zweiten Länge veränderbar ist, wobei das Kabel zum Aufweiten des Schirms klemmenbar ist, wenn der Abstand die zweite Länge ist, und der Abstand durch Bewegen der Klemmkörper derart, dass jede der Klemmflächen sich relativ zu der benachbarten Gleitfläche verschiebt, während sie mit der benachbarten Gleitfläche in Berührung bleibt, veränderbar ist.

12. Vorrichtung nach Aspekt 11, die weiter aufweist
einen fünf vierten, einen fünften und einen sechsten Klemmkörper, von denen jeder mindestens eine Klemmkante und eine Gleitkante aufweist,
bei der die Klemmkante des dritten Klemmkörpers in gleitender Berührung mit der Gleitkante des vierten Klemmkörpers, die Klemmkante des vierten Klemmkörpers in gleitender Berührung mit der Gleitkante des fünften Klemmkörpers, die die Klemmkante des fünften Klemmkörpers in gleitender Berührung mit der Gleitkante des sechsten Klemmkörpers, und die Klemmkante des sechsten Klemmkörpers in gleitender Berührung mit der Gleitkante des ersten Klemmkörpers ist, und
der Außenumfang des Durchgangs ein gleichseitiges Sechseck ist.

13. Vorrichtung nach Aspekt 12, bei der ein Mittelpunkt jedes der Klemmkörper sich radial und in Umfangsrichtung relativ zu dem Mittelpunkt des Durchgangs bewegt, wenn die Klemmkörper sich relativ zueinander bewegen.

14. Kabelklemmvorrichtung nach einem der vorherigen Aspekte, bei der
jede der Klemmflächen (126) mindestens eine zweidimensionale Kantenfläche (126a) aufweist, die mindestens eine zweidimensionale Kantenfläche (128a) des benachbarten Klemmkörpers (124) berührt und auf dieser entlang derselben gleitet,
eine Ebene durch die mindestens eine zweidimensionale Kantenfläche (126a, 128a) ausgebildet wird,
eine imaginäre Mittelachse sich senkrecht durch den Durchgang (133) erstreckt und einen Mittelpunkt des Durchgangs (133) schneidet,
eine aus den folgenden Bedingungen (i) - (ii) erfüllt ist:

(i) ein Winkel zwischen der Ebene und der imaginären Mittelachse, ungleich 90° ist, oder
(ii) die gemeinsame Ebene parallel zu der imaginären Mittelachse ist.

<div align="center">Bezugszeichenliste</div>

| 10 | Kabelklemmvorrichtung | 120 | Passbohrung |
|----|----------------------|-----|-------------|
| 12 | Basisplatte | 121 | Führungsbolzen |

(fortgesetzt)

| 14 | Kabelklemmmechanismusbereich | 121a | Führungsvorsprung |
|---|---|---|---|
| 16 | Antriebsvorrichtungs bereich | 121b | Gleitfläche |
| 18 | Fußplatte | 121c | Ende |
| 20 | Kabelhaltevorrichtung | 122 | Führungslangloch |
| 22 | Motor | 124 | Klemmkörper |
| 24 | Riemenantriebsrad | 126 | Klemmfläche |
| 26 | Riemenverstelleinrichtung | 126a | Berührbereich von Klemmfläche |
| 28 | Zahnriemen | 126b | Klemmbereich von Klemmfläche |
| 30 | Verschiebeplatte | 127 | Kante |
| 32 | Aussparung | 128 | Gleitfläche |
| 34 | Einstellbolzen | 128a | Berührbereich von Gleitfläche |
| 36 | Kabelhaltebacken | 130 | Basisfläche |
| 38 | Abdeckung | 131 | Durchgangsbohrung |
| 40 | Konsole | 132 | Führungsbolzen |
| 100 | Kabelklemmmechanismus | 133 | Durchgang |
| 101 | Aufnahmebereich | 134 | Durchgangsloch |
| 102 | Durchgangsloch | 136 | Verstellscheibe |
| 104 | Durchgangsbohrungen | 137 | Durchgangsloch |
| 106 | Führungseinrichtung | 138 | Verstelllangloch |
| 108 | Schraubbolzen | 138a | Innerer Endbereich |
| 110 | Gewindebohrung | 138b | Äußerer Endbereich |
| 112 | Scheibenförmiger Grundkörper | 138c | Mittelbereich |
| 113 | Durchgangsloch | 140 | Gewindebohrung |
| 114 | Randbereich | 142 | Haltering |
| 116 | Erster Ringbereich | 143 | Durchgangsbohrungen |
| 117 | Ringförmige Stufe | 144 | Schraubbolzen |
| 118, 118a | zweiter Ringbereich | 146 | Riemenrad |
| 119 | Gewindebohrung | 148 | Schraubbolzen |

## Patentansprüche

1. Kabelklemmvorrichtung zur Aufweitung von Schirmen von Kabeln, mit
mindestens drei Klemmkörpern (124), die dazu ausgebildet sind, einen von denselben vollständig umgebenen Durchgang (133) auszubilden, bei der
die Klemmkörper (124) zum Ändern der Größe des Umfangs des Durchgangs (133) aufeinander gleitbar sind,
jeder Klemmkörper (124) mindestens eine Klemmfläche (126) und eine Gleitfläche (128) aufweist,
die Klemmkörper (124) so zueinander angeordnet sind, dass jeweils die Klemmfläche (126) eines der Klemmkörper (124) bereichsweise mit der Gleitfläche (128) eines benachbarten Klemmkörpers (124) und die Gleitfläche (128) des einen Klemmkörpers (124) bereichsweise mit der Klemmfläche (126) eines anderen benachbarten Klemmkörpers (124) aufeinander gleitbar in Berührung ist,
durch mindestens Klemmbereiche (126b) jeder der Klemmflächen (126), die jeweils nicht in Berührung mit den Gleitflächen (128) benachbarter Klemmkörper (124) sind, der von diesen Klemmbereichen (126b) vollständig umgebene Durchgang (133) ausgebildet wird, und

die Größe des Umfangs und/oder Durchmessers des Durchgangs (133) zum Klemmen eines Kabels zum Aufweiten eines Schirms durch Bewegen der Klemmkörper (124) derart, dass die Klemmflächen (126) jeweils bezüglich der sie jeweils berührenden Gleitflächen (128) verschoben werden, verstellbar ist, **dadurch gekennzeichnet, dass** jede Klemmfläche (126) umgekehrt V-förmig zum Ausbilden einer in Längsrichtung der Klemmfläche (126) verlaufenden geraden Kante (127) ausgebildet ist und jede Gleitfläche (128) eine V-förmige geradlinige Nut so ausbildet, dass die so ausgebildeten und aufeinander gleitenden Klemmflächen (126) und Gleitflächen (128) benachbarter Klemmkörper (124) ineinandergreifen.

2. Kabelklemmvorrichtung nach Anspruch 1, bei der
die Klemmfläche (126) und die Gleitfläche (128) von jedem der Klemmkörper (124) aneinander angrenzen.

3. Kabelklemmvorrichtung nach Anspruch 1 oder 2, bei der die Klemmfläche (126) und die Gleitfläche (128) in einem ersten Winkel $\alpha$, der kleiner 180° ist, zueinander verlaufen.

4. Kabelklemmvorrichtung nach einem der Ansprüche 1 bis 3, bei der
jede der Klemmflächen (126) mindestens einen Berührbereich (126a), der in gleitender Berührung mit mindestens einem Berührbereich (128a) der Gleitfläche (128) des benachbarten Klemmkörpers (124) steht, aufweist,
mindestens eine gemeinsame Ebene durch die jeweils aufeinander gleitenden und sich jeweils berührenden Berührbereiche (126a, 128a) ausgebildet wird,
eine imaginäre Mittelachse sich senkrecht durch den Durchgang (133) erstreckt und einen Mittelpunkt des Durchgangs (133) schneidet, und
ein Winkel zwischen der gemeinsamen Ebene und der imaginären Mittelachse, ungleich 90° ist.

5. Kabelklemmvorrichtung nach einem der Ansprüche 1 bis 4, bei der die Klemmbereiche (126b) dazu ausgebildet sind, mit dem Kabel zum Aufweiten der Schirmung in Berührung zu kommen.

6. Kabelklemmvorrichtung nach einem der Ansprüche 1 bis 5, bei der die Größe des Umfangs des Durchgangs (133) durch Bewegen der Klemmkörper (124) derart, dass die Klemmflächen (126) bezüglich der sie jeweils berührenden Gleitflächen (128) jeweils um den gleichen Betrag und in die gleiche relative Richtung verschoben werden, verstellbar ist.

7. Kabelklemmvorrichtung nach einem der Ansprüche 1 bis 6, bei der der erste Winkel $\alpha$ = (360°)/N beträgt, wobei N die Anzahl der Klemmkörper (124) ist.

8. Kabelklemmvorrichtung nach einem der Ansprüche 1 bis 7, bei der
bezogen auf ein bezüglich der Kabelklemmvorrichtung insgesamt feststehendes Koordinatensystem, jeder Klemmkörper (124) zum Verkleinern der Größe des Umfangs und/oder Durchmessers des Durchgangs (133) zum Klemmen des Kabels zum Aufweiten des Schirms in einer Richtung bewegt wird, die um $\gamma$ = -(180°-360°/N)/2, wobei N die Anzahl der Klemmkörper (124) ist, in Bezug zu einer Richtung geneigt ist, die durch die Längserstreckung der Klemmfläche (126) ausgehend von dem Schnittpunkt der Klemmfläche (126) mit der Gleitfläche (128) eines einzelnen Klemmkörpers (124) definiert ist, und/oder
jeweils benachbarte Klemmkörper (124) in einem Winkel $\beta$ = ((N-2)x180°)/N zueinander bewegt werden.

9. Kabelklemmvorrichtung nach einem der Ansprüche 1 bis 8, die weiter aufweist:

eine Führungseinrichtung (106) mit N ersten geradlinigen Führungslanglöchern (122), bei der
jedes Führungslangloch (122) in dem Winkel $\beta$ zu dem jeweils benachbarten Führungslangloch (122) verläuft,
jeder Klemmkörper (124) einen ersten Führungsbolzen (132) aufweist, mit dem er jeweils in einem dem Klemmkörper (124) zugeordneten Führungslangloch (122) in Längsrichtung des Führungslangloches (122) ohne Rotation des Klemmkörpers (124) bezüglich des Führungslanglochs (122) oder um sich selbst gleitbar ist, und
die Führungslanglöcher (122) so ausgebildet sind, dass der Umfang und/oder Durchmesser des Durchgangs (133) durch gleichzeitiges Verschieben aller ersten Führungsbolzen (132) in den Führungslanglöchern (122) ohne Veränderung einer durch den Durchgang (133) verlaufenden Zentralachse (A1) bezüglich der Führungseinrichtung (106) veränderbar ist.

10. Kabelklemmvorrichtung nach Anspruch 9, die weiter aufweist:

eine um die Zentralachse (A1) des Durchgangslochs (133) drehbare Verstellscheibe (136) mit N gekrümmten Verstelllanglöchem (138),

bei der

jeder Klemmkörper (124) einen zweiten Führungsbolzen (132) aufweist, der jeweils in einem ihm zugeordneten gekrümmten Verstelllangloch (138) verschiebbar ist und integral oder separat zu dem ersten Führungsbolzen ausgebildet ist, und

eine Rotation der Verstellscheibe (136) bezüglich der Führungseinrichtung (106) dazu führt, dass die Klemmkörper (124) entlang der Führungslanglöcher (122) der Führungseinrichtung (106) verschoben werden.

**11.** Kabelklemmvorrichtung nach Anspruch 10,

bei der

die Führungseinrichtung (106) mindestens in einer ersten Ebene senkrecht zu der durch das Durchgangsloch (133) verlaufenden Zentralachse (A1) angeordnet ist,

die Verstellscheibe (136) mindestens in einer dritten Ebene angeordnet ist, die parallel zu der ersten Ebene ist, und

die Klemmkörper (124) in einer zweiten Ebene angeordnet sind, die parallel zu der ersten Ebene und zwischen der ersten und dritten Ebene ist.

**12.** Kabelklemmvorrichtung nach einem der Ansprüche 1 bis 11, bei der

jeder Klemmkörper (124) ein gleichschenkliges Dreieck oder zumindest einen Bereich ausbildet, in den ein imaginäres gleichschenkliges Dreieck hineingelegt werden kann, dessen Schenkel die Klemmfläche (126) und Gleitfläche (128) ausbilden, und

die Bewegungsrichtung jedes Klemmkörpers (124) zum Verkleinern des Umfangs und/oder Durchmessers des Durchgangs (133) parallel zu und in derselben Richtung wie die Erstreckungsrichtung der Basis des gleichschenkligen Dreiecks ausgehend von dem Schnittpunkt der Basis mit der Gleitfläche (128) ist.

## Claims

**1.** Cable clamping device for widening of shields of cables, including

at least three clamping bodies (124) that are configured to form a passage (133) completely surrounded by the same, wherein

the clamping bodies (124) are slidable on each other to change the size of the circumference of the passage (133),

each clamping body (124) includes at least one clamping surface (126) and one sliding surface (128),

the clamping bodies (124) are disposed with respect to one another such that respectively at least a portion of the clamping surface (126) of one of the clamping bodies (124) is in contact with the sliding surface (128) of an adjacent clamping body (124) and at least a portion of the sliding surface (128) of the one clamping body (124) is in contact with the clamping surface (126) of another adjacent clamping body (124) such that they are slidable on each other,

the passage (133) is formed by at least clamping regions (126b) of each of the clamping surfaces (126), which are respectively not in contact with the sliding surfaces (128) of adjacent clamping bodies (124), which is completely surrounded by these clamping regions (126b), and

the size of the circumference and/or diameter of the passage (133) is adjustable by moving the clamping bodies (124) such that the clamping surfaces (126) are respectively shifted with respect to the respectively contacting sliding surfaces (128) to clamp a cable to widen a shield, **characterized in that**

each clamping surface (126) is configured in an inverted-V-shaped manner to form a straight edge (127) extending in the longitudinal direction of the clamping surface (126) and each sliding surface (128) forms a V-shaped straight groove such that the clamping surfaces (126) and sliding surfaces (128) of adjacent clamping bodies (124), which are thus formed and slide on each other, engage one-into-the-other.

**2.** Cable clamping device according to claim 1, wherein

the clamping surface (126) and the sliding surface (128) of each of the clamping bodies (124) are adjacent to each other.

**3.** Cable clamping device according to claim 1 or 2, wherein the clamping surface (126) and the sliding surface (128) extend at a first angle $\alpha$ that is smaller than 180° with respect to each other.

**4.** Cable clamping device according to any one of claims 1 to 3, wherein

each of the clamping surfaces (126) includes at least one contact region (126a) being in slidable contact with at least one contact region (128a) of the sliding surface (128) of the adjacent clamping body (124),

at least one common plane is formed by the contact regions (126a, 128a), which respectively slide on each other and respectively contact each other,
an imaginary central axis extends perpendicularly through the passage (133) and intersects a central point of the passage (133), and
an angle between the common plane and the imaginary central axis is unequal to 90°.

5. Cable clamping device according to any one of claims 1 to 4, wherein the clamping regions (126b) are configured to come into contact with the cable to widen the shield.

6. Cable clamping device according to any one of claims 1 to 5, wherein
the size of the circumference of the passage (133) is adjustable by moving the clamping bodies (124) such that the clamping surfaces (126) are respectively shifted by the same amount and in the same relative direction with respect to the respectively contacting sliding surfaces (128).

7. Cable clamping device according to any one of claims 1 to 6, wherein
the first angle is $\alpha$ = (360°)/N, wherein N is the number of the clamping bodies (124).

8. Cable clamping device according to any one of claims 1 to 7, wherein
with respect to a coordinate system fixed with respect to the clamping device as a whole, to reduce the size of the circumference and/or diameter of the passage (133) to clamp the cable to widen the shield, each clamping body (124) is moved in a direction that is inclined by $\gamma$ = -(180°-360°/N)/2, wherein N is the number of the clamping bodies (124), with respect to a direction that is defined by the longitudinal extension of the clamping surface (126) emanating from the point of intersection of the clamping surface (126) with the sliding surface (128) of an individual clamping body (124), and/or
respectively adjacent clamping bodies (124) are moved at an angle $\beta$ = ((N-2)x180°)/N with respect to each other.

9. Cable clamping device according to any one of claims 1 to 8, further including:

   a guide device (106) having N first straight guide slots (122), wherein
   each guide slot (122) extends at the angle $\beta$ to the respectively adjacent guide slot (122),
   each clamping body (124) includes a first guide bolt (132), by which it is respectively slidable in a guide slot (122) associated with the clamping body (124) in the longitudinal direction of the guide slot (122) without rotation of the clamping body (124) with respect to the guide slot (122) or about itself, and
   the guide slots (122) are configured such that the circumference and/or diameter of the passage (133) is modifiable by simultaneous shifting all first guide bolts (132) in the guide slots (122) without modification of a central axis (A1) extending through the passage (133) with respect to the guide device (106).

10. Cable clamping device according to claim 9, further including:

    an adjusting disc (136) being rotatable about the central axis (A1) of the through-hole (133) with N curved adjusting slots (138),
    wherein
    each clamping body (124) includes a second guide bolt (132), which is respectively shiftable in a curved adjusting slot (138) associated therewith and is formed integrally or separately from the first guide bolt, and
    rotation of the adjusting disc (136) with respect to the guide device (106) results in that the clamping bodies (124) are shifted along the guide slots (122) of the guide device (106).

11. Cable clamping device according to claim 10,
    wherein
    the guide device (106) is disposed at least in a first plane perpendicular to the central axis (A1) extending through the through-hole (133),
    the adjusting disc (136) is disposed at least in a third plane that is parallel to the first plane, and
    the clamping bodies (124) are disposed in a second plane that is parallel to the first plane and between the first and third plane.

12. Cable clamping device according to any one of claims 1 to 11, wherein
    each clamping body (124) forms an isosceles triangle or at least a region, into which an imaginary isosceles triangle can be placed, whose sides form the clamping surface (126) and sliding surface (128), and
    the direction of movement of each clamping body (124) to reduce the circumference and/or diameter of the passage (133) is parallel to and in the same direction as the direction of extension of the base of the isosceles triangle emanating from the point of intersection of the base with the sliding surface (128).

**Revendications**

1. Dispositif de serrage de câbles destiné à élargir des blindages de câbles, avec
au moins trois corps de serrage (124) qui sont réalisés pour réaliser un passage (133) entouré complètement par eux, dans lequel
les corps de serrage (124) peuvent glisser l'un sur l'autre afin de modifier la dimension du périmètre du passage (133),
chaque corps de serrage (124) comporte au moins une surface de serrage (126) et une surface de glissement (128),
les corps de serrage (124) sont agencés de telle manière les uns par rapport aux autres que, à chaque fois, la surface de serrage (126) d'un des corps de serrage (124) vient en contact par endroits avec la surface de glissement (128) d'un corps de serrage (124) voisin et la surface de glissement (128) du premier corps de serrage (124) vient en contact par endroits avec la surface de serrage (126) d'un autre corps de serrage (124) voisin, à chaque fois avec un glissement possible l'une sur l'autre,
par au moins des zones de serrage (126b) de chacune des surfaces de serrage (126) qui, à chaque fois, ne viennent pas en contact avec les surfaces de glissement (128) de corps de serrage (124) voisins est réalisé le passage (133) entouré complètement par ces zones de serrage (126b), et
la dimension du périmètre et/ou du diamètre du passage (133) pour le serrage d'un câble afin d'élargir un blindage est réglable par déplacement des corps de serrage (124) de telle sorte que les surfaces de serrage (126) sont déplacées à chaque fois par rapport aux surfaces de glissement (128) respectivement en contact, **caractérisé en ce que**
chaque surface de serrage (126) est réalisée en forme de V inversé afin de réaliser une arête droite (127) s'étendant dans le sens de la longueur de la surface de serrage (126) et chaque surface de glissement (128) réalise une rainure droite en forme de V de telle sorte que les surfaces de serrage (126) et les surfaces de glissement (128), ainsi formées et glissant l'une sur l'autre, de corps de serrage (124) voisins pénètrent l'une dans l'autre.

2. Dispositif de serrage de câbles selon la revendication 1, dans lequel
la surface de serrage (126) et la surface de glissement (128) de chacun des corps de serrage (124) sont adjacentes l'une à l'autre.

3. Dispositif de serrage de câbles selon la revendication 1 ou 2, dans lequel la surface de serrage (126) et la surface de glissement (128) s'étendent l'une vers l'autre suivant un premier angle $\alpha$ qui est inférieur à 180°.

4. Dispositif de serrage de câbles selon l'une quelconque des revendications 1 à 3, dans lequel
chacune des surfaces de serrage (126) comporte au moins une zone de contact (126a) qui est en contact glissant avec au moins une zone de contact (128a) de la surface de glissement (128) du corps de serrage (124) voisin,
au moins un plan commun est formé par les zones de contact (126a, 128a) qui glissent respectivement l'une sur l'autre et qui sont respectivement en contact,
un axe médian imaginaire s'étend perpendiculairement à travers le passage (133) et coupe un point médian du passage (133), et
un angle entre le plan commun et l'axe médian imaginaire est différent de 90°.

5. Dispositif de serrage de câbles selon l'une quelconque des revendications 1 à 4, dans lequel les zones de serrage (126b) sont réalisées pour venir en contact avec le câble afin d'élargir le blindage.

6. Dispositif de serrage de câbles selon l'une quelconque des revendications 1 à 5, dans lequel
la dimension du périmètre du passage (133) est réglable par déplacement des corps de serrage (124) de telle sorte que les surfaces de serrage (126) sont déplacées par rapport aux surfaces de glissement (128) respectivement en contact avec elles, à chaque fois de la même valeur et dans la même direction relative.

7. Dispositif de serrage de câbles selon l'une quelconque des revendications 1 à 6, dans lequel
le premier angle est $\alpha = (360°)/N$, N étant le nombre de corps de serrage (124).

8. Dispositif de serrage de câbles selon l'une quelconque des revendications 1 à 7, dans lequel,
dans un système de coordonnées globalement fixe par rapport au dispositif de serrage de câbles, chaque corps de serrage (124) est déplacé pour réduire la dimension du périmètre ou du diamètre du passage (133) pour serrer le câble afin d'élargir le blindage dans une direction qui est inclinée de $\gamma$ = (180°-360°/N)/2, N étant le nombre de corps de serrage (124), par rapport à une direction qui est définie par l'extension longitudinale de la surface de serrage (126) à partir du point d'intersection de la surface de serrage (126) avec la surface de glissement (128) d'un corps de serrage (124) individuel, et/ou

des corps de serrage (124) respectivement voisins sont déplacés l'un vers l'autre avec un angle $\beta$ = ((N 2)x180°)/N.

9. Dispositif de serrage de câbles selon l'une quelconque des revendications 1 à 8, qui comporte en outre :

    un dispositif de guidage (106) avec N premiers trous oblongs de guidage (122) droits, dans lequel
    chaque trou oblong de guidage (122) s'étend avec un angle $\beta$ par rapport au trou oblong de guidage (122) respectivement voisin,
    chaque corps de serrage (124) comporte un premier boulon de guidage (132) avec lequel il peut glisser à chaque fois dans un trou oblong de guidage (122) associé au corps de serrage (124) dans la direction longitudinale du trou oblong de guidage (122) sans rotation du corps de serrage (124) par rapport au trou oblong de guidage (122) ou autour de lui-même, et
    les trous oblongs de guidage (122) sont réalisés de telle sorte que le périmètre et/ou le diamètre du passage (133) est modifiable par déplacement simultané de tous les premiers boulons de guidage (132) dans les trous oblongs de guidage (122) sans modification d'un axe central (A1) s'étendant à travers le passage (133) par rapport au dispositif de guidage (106).

10. Dispositif de serrage de câbles selon la revendication 9, qui comporte en outre :

    un disque de réglage (136) pouvant tourner autour de l'axe central (A1) du trou de passage (133) et muni de N trous oblongs de réglage (138) courbes,
    dans lequel
    chaque corps de serrage (124) comporte un deuxième boulon de guidage (132) qui est déplaçable à chaque fois dans un trou oblong de réglage (138) courbe, qui lui est associé, et qui est réalisé comme partie intégrante ou séparée du premier boulon de guidage, et
    une rotation du disque de réglage (136) par rapport au dispositif de guidage (106) fait que les corps de serrage (124) sont déplacés le long des trous oblongs de guidage (122) du dispositif de guidage (106).

11. Dispositif de serrage de câbles selon la revendication 10,
    dans lequel
    le dispositif de guidage (106) est agencé au moins dans un premier plan perpendiculairement à l'axe central (A1) s'étendant à travers le trou de passage (133),
    le disque de réglage (136) est agencé au moins dans un troisième plan qui est parallèle au premier plan, et
    les corps de serrage (124) sont agencés dans un deuxième plan qui est parallèle au premier plan et qui est situé entre le premier et le troisième plan.

12. Dispositif de serrage de câbles selon l'une quelconque des revendications 1 à 11, dans lequel
    chaque corps de serrage (124) forme un triangle isocèle ou au moins une zone dans laquelle peut être placé un triangle isocèle imaginaire dont les côtés forment la surface de serrage (126) et la surface de glissement (128), et
    la direction de déplacement de chaque corps de serrage (124) pour réduire le périmètre et/ou le diamètre du passage (133) est parallèle et dans la même direction que la direction d'extension de la base du triangle isocèle à partir du point d'intersection de la base avec la surface de glissement (128).

Fig. 1A

Fig. 1B

EP 3 125 382 B1

Fig. 1C

Fig. 1D

EP 3 125 382 B1

Fig. 2A

EP 3 125 382 B1

Fig. 2B

Fig. 3A

Fig. 3B

EP 3 125 382 B1

Fig. 3C

Fig. 3D

Fig. 4A

Fig. 4B

Fig. 5

EP 3 125 382 B1

144

142

138b

138c

138a

136

143

140

138

**Fig. 6**

Fig. 7A

33

EP 3 125 382 B1

**Fig. 7B**

EP 3 125 382 B1

Fig. 7C

Fig. 7D

Fig. 8A

EP 3 125 382 B1

EP 3 125 382 B1

Fig. 8B

Fig. 9A

Fig. 9B

Fig. 9C

EP 3 125 382 B1

112
110
D4

Fig. 9D

42

Fig. 10A

EP 3 125 382 B1

122
132

Fig. 10B

Fig. 11

142

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006128597 A1
- DE 102013206804 A1
- EP 0297484 A1
- GB 521433 A
- EP 2887475 A1
- KR 2020090012235 U